# EUROPÄISCHE PATENTSCHRIFT

(11) **EP 4 110 624 B1**
(45) Veröffentlichungstag und Bekanntmachung des Hinweises auf die Patenterteilung: **15.11.2023**
(21) Anmeldenummer: 21707983.9
(22) Anmeldetag: 24.02.2021
(51) Int. Cl.: B60B 11/10, B60B 15/26

(54) **NOTRADAUFSATZ FÜR EIN FAHRZEUGRAD**
EMERGENCY WHEEL ATTACHMENT FOR A VEHICLE WHEEL
ENSEMBLE DE ROUE D'URGENCE POUR UNE ROUE DE VÉHICULE

(30) Priorität: 28.02.2020 DE 102020001324
(43) Veröffentlichungstag der Anmeldung: 04.01.2023
(73) Patentinhaber: GV Engineering GmbH, 71296 Heimsheim (DE)
(72) Erfinder: TSIBERIDIS, Konstantinos, 74199 Untergruppenbach (DE)
(74) Vertreter: Beyer, Andreas
(86) Internationale Anmeldenummer: PCT/EP2021/054558
(87) Internationale Veröffentlichungsnummer: WO 2021/170657

(56) Entgegenhaltungen:
- WO-A1-2018/138341
- WO-A1-2019/141817
- GB-A- 857 897

## Beschreibung

Die Erfindung betrifft einen Notradaufsatz für ein Fahrzeugrad, das eine Felge und einen auf der Felge angeordneten Reifen umfasst, wobei der Notradaufsatz dazu vorgesehen ist, auf die Außenseite des Fahrzeugrads aufgesetzt zu werden. Ein gattungsgemäßer Notradaufsatz ist aus dem Dokument WO 2019/141817 A1 bekannt.

Ein solcher Notradaufsatz ist dazu gedacht, eine Weiterfahrt eines Fahrzeugs zu ermöglichen, bei dem ein Reifen beschädigt ist und deshalb keine Luft mehr halten kann. Normalerweise muss in einem solchen Fall das defekte Fahrzeugrad vom Fahrzeug abgenommen und durch ein Reserverad ersetzt werden. Der erfindungsgemäße Notradaufsatz hingegen ist dazu vorgesehen, auf die Außenseite des defekten Fahrzeugrads aufgesetzt zu werden und vermeidet somit die Notwendigkeit, das defekte Fahrzeugrad wechseln zu müssen.

Im Zusammenhang mit einem solchen Notradaufsatz ist es insbesondere wichtig, dass der Notradaufsatz einfach und dennoch äußerst sicher an einem Fahrzeugrad montierbar ist, denn in einem anschließenden Betriebszustand eines mit dem Notradaufsatz versehenen Fahrzeugrades wirken erhebliche Kräfte auf den Notradaufsatz und letzterer darf sich keinesfalls unbeabsichtigt vom Fahrzeugrad lösen. Auch soll ein solcher Notradaufsatz möglichst platzsparend und leichtgewichtig ausgeführt sein können, um den Energieverbrauch eines Fahrzeugs, in dem ein solcher Notradaufsatz mitgeführt wird, nicht über Gebühr zu erhöhen.

Die Erfindung hat sich deshalb zum Ziel gesetzt, einen Notradaufsatz für ein Fahrzeugrad anzugeben, der einfach und dennoch sicher am Fahrzeugrad montiert werden kann und der zugleich platzsparend und leichtgewichtig ausgeführt werden kann.

Dieses Ziel wird erfindungsgemäß mit einem Notradaufsatz für ein Fahrzeugrad erreicht, der die im Patentanspruch 1 angegebenen Merkmale aufweist. Ein solcher Notradaufsatz umfasst eine im Wesentlichen kreisringförmige Montageeinheit, welche zum Montieren des Notradaufsatzes am Fahrzeugrad dient, und eine im Wesentlichen kreisringförmige Laufflächeneinheit, die im Betriebszustand des Notradaufsatzes eine Fahrbahn kontaktiert, auf der das mit dem Notradaufsatz versehene Fahrzeugrad abrollen soll. Mit "im Wesentlichen kreisringförmiger" Montageeinheit und Laufflächeneinheit ist hier gemeint, dass die Grundform der Montageeinheit und der Laufflächeneinheit kreisringförmig ist, was jedoch nicht ausschließt, dass sich von der Montageeinheit und der Laufflächeneinheit jeweils Teile erstrecken, die nicht der Kreisringform zugehörig sind. So ist etwa die Montageeinheit mit wenigstens zwei Haltekrallen versehen, die zur Befestigung der Montageeinheit an der Felge des Fahrzeugrads durch Hintergreifen des Felgenhorns der Felge ausgebildet sind. Ausführungsformen des erfindungsgemäßen Notradaufsatzes haben üblicherweise mehr als nur zwei Haltekrallen, beispielsweise drei, vier, fünf oder auch sechs Haltekrallen. Wenigstens eine der vorhandenen Haltekrallen ist radial beweglich ausgeführt, damit ihr Abstand von einem Mittelpunkt der Montageeinheit verändert werden kann. Je nach Ausführungsform können mehrere oder sogar alle Haltekrallen radial beweglich ausgeführt sein. Die radiale Bewegbarkeit der mindestens einen Haltekralle ermöglicht es, diese Haltekralle oder alle radial beweglichen Haltekrallen zunächst in einer radial weiter außen liegenden Position anzuordnen, um die Montageeinheit in diesem Zustand auf die Felge des Fahrzeugrads aufsetzen zu können. Durch anschließendes Verändern der radialen Position der oder aller radial beweglichen Haltekrallen nach radial innen hintergreifen die Haltekrallen dann das Felgenhorn der Felge und die Montageeinheit wird auf der Felge verspannt. Hierzu weist die Montageeinheit ein ringförmiges Betätigungselement auf, das um eine Achse drehbar ist, die im Betriebszustand des Notradaufsatzes (also dann, wenn der Notradaufsatz auf dem Fahrzeugrad befestigt ist) mit der Fahrzeugradachse zusammenfällt. Das ringförmige Betätigungselement bildet einen Teil eines Getriebes, welches eine Drehung des Betätigungselements in eine translatorische Radialbewegung der oder aller radial beweglicher Haltekrallen umsetzt. Um das Betätigungselement in Drehung versetzen zu können, ist die Montageeinheit ferner mit einer Antriebseinrichtung versehen, die mit dem Betätigungselement gekoppelt ist oder koppelbar ist und deren Betätigung zur Drehung des Betätigungselements führt.

Bei manchen Ausführungsformen des erfindungsgemäßen Notradaufsatzes ist das ringförmige Betätigungselement eine Kette und die Antriebseinrichtung ist ein drehbares Antriebsritzel, welches mit der Kette in Eingriff steht oder in Eingriff bringbar ist.

Wenn das ringförmige Betätigungselement eine Kette ist, dann ist gemäß einer Ausführungsform jede radial bewegliche Haltekralle mit einem von der Haltekralle radial einwärts verlaufenden Haltearm versehen, der an einer Seite eine zahnstangenartige Verzahnung aufweist, welche mit einem der Haltekralle zugeordneten, drehbaren Übertragungsritzel in Eingriff steht, welches seinerseits mit der Kette in Eingriff steht. Bei einer solchen Ausführungsform wird eine Drehung des Antriebsritzels auf die Kette übertragen, die sich dadurch in Umfangsrichtung bewegt und diese Bewegung auf das oder die Übertragungsritzel überträgt, dessen bzw. deren Drehung mittels der an jeder beweglichen Haltekralle vorhandenen zahnstangenartigen Verzahnung in eine radiale Bewegung jeder beweglichen Haltekralle umgesetzt wird, die abhängig von der Drehrichtung des Antriebsritzels entweder radial einwärts oder radial auswärts verläuft.

Zur Aufnahme bzw. Lagerung der Kette, des Antriebsritzels sowie des oder aller Übertragungsritzel kann die Montageeinheit ein entsprechend geformtes Gehäuse aufweisen.

Bei anderen Ausführungsformen des erfindungsgemäßen Notradaufsatzes ist das Betätigungselement eine zumindest im Wesentlichen kreisringförmige Betätigungsscheibe. Diese Betätigungsscheibe kann eine Innenverzahnung oder eine Außenverzahnung aufweisen und die Antriebseinrichtung kann wie zuvor im Zusammenhang mit der Kette erläutert ein drehbares Antriebsritzel sein, welches mit der Innenverzahnung oder der Außenverzahnung in Eingriff steht oder in Eingriff bringbar ist, um die Betätigungsscheibe in Drehung versetzen zu können.

Bei solchen Ausführungsformen kann die Betätigungsscheibe mit einer kreisringförmigen Reihe von Ausnehmungen oder Durchbrechungen versehen und jeder beweglichen Haltekralle ein Ritzel zugeordnet sein, das mit den Ausnehmungen oder Durchbrechungen der Betätigungsscheibe in Eingriff steht und mit einer Gewindespindel verbunden ist, die ihrerseits mit einer zugehörigen Haltekralle verbunden ist und die eine Drehbewegung des Ritzels in eine zumindest im Wesentlichen radial gerichtete Translationsbewegung der Haltekralle umsetzt. Die Ausnehmungen oder Durchbrechungen sind vorzugsweise schlitzförmig und erstrecken sich hauptsächlich in radialer Richtung. Eine solche Betätigungsscheibe ähnelt in ihrem Aussehen einem sogenannten Resolverrad, wie es im Zusammenhang mit Drehzahlsensoren zum Einsatz kommt, hat jedoch eine gänzlich andere Funktion.

Bei anderen Ausführungsformen weist die Betätigungsscheibe eine Innenverzahnung und eine Außenverzahnung auf, wobei das drehbare Antriebsritzel mit der Außenverzahnung in Eingriff steht oder in Eingriff bringbar ist und jeder radial beweglichen Haltekralle ein insbesondere als Kegelrad ausgestaltetes Zahnrad zugeordnet ist, das mit der Innenverzahnung der Betätigungsscheibe in Eingriff steht und mit einer Gewindespindel verbunden ist, die ihrerseits mit einer zugehörigen Haltekralle verbunden ist und eine Drehbewegung des (Kegel)zahnrades in eine zumindest im Wesentlichen radial gerichtete Translationsbewegung der Haltekralle umsetzt. Bei einer solchen Ausführungsform befindet sich das drehbare Antriebsritzel der Montageeinheit an einer Stelle etwas radial außerhalb der Betätigungsscheibe, wodurch ein zentraler freier Raum in der Mitte der Montageeinheit maximiert werden kann. Dies kann vorteilhaft im Zusammenhang mit Fahrzeugradfelgen sein, die eine sogenannte Überschüsselung aufweisen, d.h. für Felgen, deren mittlerer Bereich axial weiter hervorsteht als radial äußere Bereiche der Felge. Wenn die Montageeinheit einen möglichst großen zentralen freien Bereich aufweist, dann kann die Montageeinheit auch bei Felgen, die eine Überschüsselung haben, dicht am Fahrzeugrad montiert werden, ohne mit der Felge zu kollidieren.

Wenn ein möglichst großer freier zentraler Bereich nicht so wichtig ist, dann kann in einer Abwandlung der vorgenannten Ausführungsform das drehbare Antriebsritzel der Montageeinheit mit der Innenverzahnung in Eingriff stehen. Die Außenverzahnung der Betätigungsscheibe kann dann entfallen.

Bei anderen Ausführungsformen des erfindungsgemäßen Notradaufsatzes weist die Betätigungsscheibe eine Innenverzahnung oder eine Außenverzahnung auf und die Antriebseinrichtung ist wiederum ein drehbares Antriebsritzel, welches ähnlich der zuvor erläuterten Abwandlung mit der Innenverzahnung oder der Außenverzahnung in Eingriff steht oder in Eingriff bringbar ist. Zur Umsetzung der Drehbewegung der Betätigungsscheibe in eine Translationsbewegung jeder beweglichen Haltekralle ist jede bewegliche Haltekralle mit einem von der Haltekralle radial einwärts verlaufenden Haltearm versehen, der an einer Seite eine zahnstangenartige Verzahnung aufweist, welche mit einem der Haltekralle zugeordneten drehbaren Übertragungsritzel in Eingriff steht, das seinerseits mit der Innenverzahnung oder der Außenverzahnung der Betätigungsscheibe in Eingriff steht. Diese Ausführungsform gleicht einer weiter oben beschriebenen Ausführungsform, bei der das Betätigungselement als Kette ausgestaltet ist. Sowohl bei dieser weiter oben beschriebenen Ausführungsform als auch bei der zuletzt beschriebenen Ausführungsform kann das oder eines der Übertragungsritzel zugleich als Antriebsritzel fungieren. Mit anderen Worten, statt eines separat angeordneten Antriebsritzels kann das oder eines der Übertragungsritzel zugleich das Antriebsritzel sein. Auf diese Weise kann ein Gehäuse der Montageeinheit einfacher ausgeführt werden, da eine separate Lagerung des Antriebsritzels entfällt, und es können Bauteile eingespart werden.

Bei bestimmten Ausführungsformen, bei denen das Betätigungselement der Montageeinheit als ringförmige Betätigungsscheibe ausgestaltet ist, weist die Betätigungsscheibe wenigstens eine spiralsegmentförmige Kulisse auf, die mit einem Kulissenstein zusammenwirkt, der an einem mit einer radial beweglichen Haltekralle verbundenen Haltearm angeordnet ist. Wird die die wenigstens eine spiralsegmentförmige Kulisse aufweisende Betätigungsscheibe gedreht, so überträgt sich deren Bewegung über den in oder auf der Kulisse laufenden Kulissenstein auf die zugehörige Haltekralle und sorgt dafür, dass die Haltekralle ihren Abstand vom Mittelpunkt der Montageeinheit verändert. Jede radial bewegliche Haltekralle ist dabei so geführt, dass sie sich nur in radialer Richtung, nicht jedoch in Umfangsrichtung bewegen kann.

Wenn die Betätigungsscheibe nur eine spiralsegmentförmige Kulisse aufweist, dann muss bei Vorhandensein mehrerer, in Umfangsrichtung der Montageeinheit verteilt angeordneter radial beweglicher Haltekrallen jede Haltekralle speziell für die zugehörige Umfangsposition ausgestaltet sein, damit alle radial beweglichen Haltekrallen in einer Ausgangsposition der Betätigungsscheibe den gleichen radialen Abstand zur Mitte der Montageeinheit haben. Jede radial bewegliche Halterkralle muss demnach bei einer solchen Ausführungsform beim Zusammenbau der Montageeinheit an einer ganz bestimmten, ihr zugehörigen Stelle montiert werden.

Statt einer einzigen spiralsegmentförmigen Kulisse kann die Betätigungsscheibe jedoch auch mehrere in Umfangsrichtung nebeneinander angeordnete spiralsegmentförmige Kulissen aufweisen. Bei einer solchen Ausführungsform können die radial beweglichen Haltekrallen alle gleich ausgeführt werden und es muss beim Zusammenbau der Montageeinheit nicht mehr darauf geachtet werden, dass jede Haltekralle an einem nur für sie passenden Ort montiert wird.

Die mehreren spiralsegmentförmigen Kulissen können sich in Umfangsrichtung auch überlappen, sodass auf jedem einer radial beweglichen Haltekralle zugehörigen Abschnitt der Betätigungsscheibe in Radialrichtung gesehen mehrere spiralsegmentförmige Kulissen nebeneinander angeordnet sind. Bei einer solchen Ausführungsform kann dann der Haltearm einer oder jeder radial beweglichen Haltekralle mit mehreren radial nebeneinander angeordneten Kulissensteinen zum Eingreifen in die mehreren Kulissen versehen sein.

Der oder jeder Kulissenstein kann die Form eines Stifts oder Bolzens haben. Alternativ kann der oder jeder Kulissenstein die Form einer kurzen spiralsegmentförmigen Rippe haben, wobei die Dimensionierung und Form der spiralsegmentförmigen Rippe solchermaßen gewählt ist, dass sie mit einer zugehörigen spiralsegmentförmigen Kulisse zusammenwirken kann. Kulissensteine mit anderen Formen sind ebenfalls denkbar, wichtig ist lediglich, dass die Drehbewegung der Betätigungsscheibe von der Kulisse möglichst verlustfrei auf den Kulissenstein übertragen wird.

Die oder jede Kulisse kann eine spiralsegmentförmige, schlitzartige Durchbrechung der Betätigungsscheibe sein. Alternativ kann die oder jede Kulisse durch jeweils eine spiralsegmentförmige Kulissenrippe gebildet sein, die auf der Betätigungsscheibe ausgebildet ist bzw. sind.

Es wurde bereits erläutert, dass jede Haltekralle der Montageeinheit dazu dient, die Montageeinheit an der Felge des Fahrzeugrads zu montieren und sicher zu befestigen. Bei bevorzugten Ausführungsformen des erfindungsgemäßen Notradaufsatzes weist jede Haltekralle einen Kontaktabschnitt zur Kontaktierung des Felgenhorns auf und ist ferner mit wenigstens einem in Umfangsrichtung neben dem Kontaktabschnitt angeordneten Sicherheitsabschnitt versehen, der im Betriebszustand des Notradaufsatzes, d.h. im korrekt auf einer Felge eines Fahrzeugrads montierten Zustand des Notradaufsatzes, einen kleinen radialen Abstand vom Felgenhorn hat. Dieser Abstand sollte im Bereich von 0,2 bis 0,5 mm liegen und beträgt vorzugsweise etwa 0,3 mm. Der oder jeder Sicherheitsabschnitt der Haltekralle ist in Umfangsrichtung der Montageeinheit neben dem Kontaktabschnitt angeordnet und von ihm durch einen Schlitz beabstandet. Wenn der Kontaktabschnitt ein mittlerer Kontaktabschnitt ist, dann ist vorzugsweise jeweils ein Sicherheitsabschnitt auf beiden Seiten des mittleren Kontaktabschnitts der Haltekralle angeordnet. Wenn es im Betrieb des Notradaufsatzes zu einer Überlastung des Kontaktabschnitts einer Haltekralle und daraus resultierend zu einem Versagen des Kontaktabschnitts kommt, beispielsweise durch ein Abbrechen des Kontaktabschnitts von der Haltekralle, dann sorgen der Sicherheitsabschnitt oder die Sicherheitsabschnitte der betreffenden Haltekralle dafür, dass diese Haltekralle sich nicht von der Felge löst. Das zwischen jedem Sicherheitsabschnitt und dem Felgenhorn vorhandene Spiel sorgt zum einen dafür, dass bei einer Überlastung des Kontaktabschnitts nicht auch der Sicherheitsabschnitt oder die Sicherheitsabschnitte der betreffenden Haltekralle ebenfalls überlastet werden, und sorgt zum anderen dafür, dass nach einem Versagen des ursprünglich spielfrei am Felgenhorn anliegenden Kontaktabschnitts ein durch das Spiel zwischen Felgenhorn und Sicherheitsabschnitt bedingtes Klappern auftritt, welches einen Fahrer darauf hinweist, dass mit dem Notradaufsatz etwas nicht in Ordnung ist.

Zur besseren Kraftverteilung und Erhöhung der Befestigungssicherheit können manche oder alle Haltekrallen als Doppelkrallen ausgeführt sein. Eine Doppelkralle hat zwei Haltekrallenelemente, die in Umfangsrichtung voneinander beabstandet sind, wobei beide Haltekrallenelemente an einem gemeinsamen Haltearm befestigt sind. Jedes Haltekrallenelement einer Doppelkralle kann dabei wie zuvor beschrieben einen Kontaktabschnitt und wenigstens einen in Umfangsrichtung daneben angeordneten Sicherheitsabschnitt aufweisen.

Um sicherzustellen, dass beim radialen Festspannen einer Doppelkralle jedes Haltekrallenelement in eine korrekte Anlage mit dem Felgenhorn eines Fahrzeugrades gerät, kann zumindest eines der Haltekrallenelemente dazu eingerichtet sein, sich relativ zu dem gemeinsamen Haltearm ein geringes Ausmaß um eine Achse drehen zu können, die senkrecht zu einer durch den gemeinsamen Haltearm aufgespannten Ebene verläuft. Auf diese Weise können unter Umständen vorhandene Winkelfehler ausgeglichen werden und es wird ein Verkanten eines Haltekrallenelements verhindert.

Um bei der Montage der Montageeinheit am Fahrzeugrad ein Einführen der Haltekrallen in einen Bereich zwischen dem Felgenhorn und dem Reifen zu erleichtern, ist bei bevorzugten Ausführungsformen des erfindungsgemäßen Notradaufsatzes jede Haltekralle mit einer oder mehreren Ausnehmungen versehen, die sich auf ihrer dem Reifen zugewandten Seite befinden und im Bereich eines Endabschnitts der Haltekralle angeordnet sind, der dem freien Ende der Haltekralle benachbart ist bzw. das freie Ende umfasst. Bei der Montage der Haltekralle ermöglichen es diese Ausnehmungen dem Gummimaterial des Reifens, sich in die Ausnehmungen hineinzudrücken und dadurch die Kraft zu verringern, die beim Einführen der Haltekralle in den genannten Bereich vom Reifen auf die Haltekralle ausgeübt wird.

Damit ein Benutzer einfach feststellen kann, ob ein erfindungsgemäßer Notradaufsatz korrekt an einem Fahrzeugrad montiert wurde, ist vorzugsweise jede Haltekralle mit einer radial verlaufenden Anschlagfläche ausgestattet, mit der sie im Betriebszustand des Notradaufsatzes an einer Außenseite der Felge anliegt, beispielsweise am Felgenhorn. Ferner ist wenigstens eine und vorzugsweise jede Haltekralle mit einem federnd in Richtung der Felge vorgespannten Indikatorelement versehen, das die Haltekralle im Bereich der radial verlaufenden Anschlagfläche durchsetzt, wobei ein der Felge zugewandtes Ende des Indikatorelements zur Kontaktierung der Felge bestimmt ist und ein entgegengesetztes, anderes Ende des Indikatorelements im Betriebszustand des Notradaufsatzes eine korrekte Montage der Montageeinheit anzeigt. Beispielsweise ragt bei korrekter Montage der Montageeinheit ein farblich markiertes Ende des Indikatorelements auf der vom Fahrzeugrad abgewandten Seite des Notradaufsatzes heraus und zeigt dadurch an, dass die Montageeinheit korrekt montiert worden ist. Alternativ kann dieses Ende des Indikatorelements auch bündig mit einer umgebenden Oberfläche des Notradaufsatzes abschließen, wenn eine korrekte Montage der Montageeinheit vorliegt. Das oder jedes Indikatorelement kann auch anders ausgestaltet sein, sofern es dazu in der Lage ist, ein korrektes Anliegen der radial verlaufenden Anschlagfläche an der Außenseite der Felge anzuzeigen.

Zur platzsparenden und montagefreundlichen Ausgestaltung des erfindungsgemäßen Notradaufsatzes ist bei bevorzugten Ausführungsformen die Laufflächeneinheit eine von der Montageeinheit separate und vorzugsweise aus mehreren Kreisringsegmenten bestehende Einheit, die zur Verbindung mit der Montageeinheit ausgestaltet und im Betriebszustand des Notradaufsatzes mit der Montageeinheit verbunden ist. Gemäß einem Ausführungsbeispiel ist die Laufflächeneinheit eine aus zwei Halbkreisringsegmenten bestehende Einheit. Bei einer alternativen Ausführungsform besteht die Laufflächeneinheit aus zwei Kreisringsegmenten, von denen eines etwa zwei Drittel des Umfangs einnimmt und das andere Kreisringsegment ein Drittel des Umfangs einnimmt. Noch andere Ausgestaltungen sind denkbar, beispielsweise eine Aufteilung der Laufflächeneinheit in drei oder mehr Kreisringsegmente.

Zur Verbindung der Laufflächeneinheit mit der Montageeinheit dienen in manchen Ausführungsformen Aufnahmebolzen, die auf der von dem Fahrzeugrad abgewandten Seite der Montageeinheit hervorstehend angeordnet sind. Nachdem die Montageeinheit am Fahrzeugrad befestigt worden ist, kann die Laufflächeneinheit auf die von der Montageeinheit hervorstehenden Aufnahmebolzen aufgeschoben und an ihnen befestigt werden. Die Aufnahmebolzen können an einem Gehäuse der Montageeinheit befestigt sein. Alternativ oder zusätzlich können die Aufnahmebolzen an den Haltekrallen befestigt sein, insbesondere am radial einwärts verlaufenden Haltearm jeder Haltekralle. Wenn ein Aufnahmebolzen an der Haltekralle befestigt ist, dann der Aufnahmebolzen zugleich als Kulissenstein dienen, indem er z.B. durch eine als spiralsegmentförmige, schlitzartige Durchbrechung ausgestaltete Kulisse der Betätigungsscheibe ragt. Gemäß einer Ausführungsform sind die Aufnahmebolzen Gewindebolzen, welche es ermöglichen, die Laufflächeneinheit durch Muttern an der Montageeinheit zu befestigen, mit denen die Laufflächeneinheit an der Montageeinheit festgeschraubt wird.

Die vorgenannten Muttern können Hutmuttern sein und es kann in jeder Hutmutter eine optische und/oder akustische Anzeigeeinrichtung enthalten sein, die einen korrekten Montagezustand signalisiert. Beispielsweise kann ein mittels eines bistabilen Blechs erzeugtes Knackgeräusch signalisieren, dass ein zur korrekten Befestigung der Laufflächeneinheit an der Montageeinheit notwendiges Drehmoment erreicht worden ist. Alternativ oder zusätzlich kann ein nach außen aus der Hutmutter herausspringender Stift oder ein mit der äußeren Oberfläche der Hutmutter bündig abschließender Stift signalisieren, dass die Hutmutter korrekt angezogen worden ist.

Bei abgewandelten Ausführungsformen des erfindungsgemäßen Notradaufsatzes dienen Rasteinrichtungen zur Verbindung der Laufflächeneinheit mit der Montageeinheit, wobei die Rasteinrichtungen auf der von dem Fahrzeugrad abgewandten Seite des Notradaufsatzes angeordnet sind. Gemäß einer Ausführungsform kann jede Rasteinrichtung einen auf der Montageeinheit angeordneten, radial beweglichen Schieber umfassen, der radial auswärts federnd vorgespannt ist, wobei der Schieber eine Auflauframpe aufweist, die beim Montieren der Laufflächeneinheit mit einer zugeordneten Fläche der Laufflächeneinheit in Kontakt kommt, sodass der Schieber beim Montagevorgang radial einwärts verschoben wird und sich nach erfolgter Montage der Laufflächeneinheit aufgrund seiner federnden Vorspannung wieder radial auswärts und über die Oberfläche der Laufflächeneinheit schiebt und die Laufflächeneinheit dadurch in korrekt montierter Stellung arretiert. Abgewandelte Ausführungen der Rasteinrichtung sind ebenfalls denkbar. Alle Rasteinrichtungen haben jedoch den Vorteil, dass die Laufflächeneinheit zur Verbindung mit der Montageeinheit lediglich auf die bereits am Fahrzeugrad befestigte Montageeinheit aufgeschoben zu werden braucht und dann selbsttätig verrastet. Ein Verschrauben der Laufflächeneinheit an der Montageeinheit ist somit nicht mehr erforderlich. Bei solchen Ausführungsformen mit selbsttätiger Verrastung der Laufflächeneinheit braucht die Ausgestaltung der Montageeinheit nicht notwendigerweise im Wesentlichen kreisringförmig zu sein, sondern es können auch anders ausgestaltete Montageeinheiten verwendet werden, beispielsweise solche, bei denen sich mehrere Befestigungsarme aus einem Zentrum der Montageeinheit radial auswärts erstrecken, an deren freiem Ende sich jeweils mindestens eine Haltekralle befindet.

Insbesondere bei Ausführungsformen des erfindungsgemäßen Notradaufsatzes, die relativ wenige Haltekrallen aufweisen, kann zur Erhöhung der Befestigungssicherheit wenigstens eine selbstverspannende Sicherheitskralle zum Hintergreifen des Felgenhorns der Felge vorgesehen sein. Die oder jede selbstverspannende Sicherheitskralle ist auf der dem Fahrzeugrad zugewandten Seite der Laufflächeneinheit angeordnet, wobei jede Sicherheitskralle in Umfangsrichtung des Notradaufsatzes gesehen vorzugsweise zwischen jeweils zwei Haltekrallen angeordnet ist. Eine beispielhafte Ausführungsform kann drei Haltekrallen und drei selbstverspannende Sicherheitskrallen aufweisen. Selbstverständlich können solche selbstverspannenden Sicherheitskrallen auch an Ausführungsformen des Notradaufsatzes vorgesehen sein, die mehr als nur relativ wenige Haltekrallen aufweisen.

Jede Sicherheitskralle weist vorzugsweise einen Betätigungsschieber auf, dessen eines Ende eine Lauffläche der Laufflächeneinheit durchsetzt und radial aus der Lauffläche hervorsteht. Bei einem Abrollen der Lauffläche im Betrieb des Notradaufsatzes wird das radial aus der Lauffläche hervorstehende Ende des Betätigungsschiebers durch einen Kontakt mit der Fahrbahnoberfläche radial nach innen gedrückt, wodurch sich das andere, radial innere Ende des Betätigungsschiebers radial einwärts verlagert und durch in Kontakt kommen mit der Sicherheitskralle die Sicherheitskralle an das bzw. hinter das Felgenhorn der Felge drückt.

Bei bevorzugten Ausführungsformen ist der bzw. jeder Betätigungsschieber nach radial auswärts federnd vorgespannt und weist eine Arretierungseinrichtung auf, die im Anschluss an eine radial einwärts erfolgende Verlagerung des Betätigungsschiebers verhindert, dass sich der Betätigungsschieber radial auswärts bewegt. Die Arretierungseinrichtung sorgt also dafür, dass die mittels des Betätigungsschiebers an bzw. hinter das Felgenhorn der Felge gedrückte Sicherheitskralle diese Position beibehält. Als Arretierungseinrichtung können beispielsweise Plättchen aus Federstahl verwendet werden, deren freies Ende mit einer am Betätigungsschieber vorhandenen Rastverzahnung zusammenwirkt. Andere Arretierungseinrichtungen zur Verhinderung einer radial auswärts gerichteten Bewegung des Betätigungsschiebers nach erfolgter Betätigung sind denkbar.

Die zuvor beschriebenen Ausführungsformen des Notradaufsatzes mit wenigstens einer selbstverspannenden Sicherheitskralle sind nicht davon abhängig, dass die Ausgestaltung der Montageeinheit im Wesentlichen kreisringförmig ist. Vielmehr können auch anders ausgestaltete Montageeinheiten verwendet werden, beispielsweise solche, bei denen sich mehrere Befestigungsarme aus einem Zentrum der Montageeinheit radial auswärts erstrecken, an deren freiem Ende sich jeweils mindestens eine Haltekralle befindet.

Bei den zuvor beschriebenen Ausführungsformen mit einer oder mehreren Sicherheitskrallen dient der nach radial auswärts federnd vorgespannte Betätigungsschieber, der aus der Lauffläche des Notradaufsatzes radial hervorsteht, zum radial einwärts Verschieben einer zugehörigen Sicherheitskralle und ist deshalb als Betätigungsschieber bezeichnet. Ein solchermaßen aufgebauter und angeordneter Schieber kann jedoch auch dazu verwendet werden, eine radial bewegliche Haltekralle, die mittels der beschriebenen Montageeinheit des erfindungsgemäßen Notradaufsatzes in einen Eingriff mit dem Felgenhorn gebracht worden ist, gegen ein unbeabsichtigtes Lockern oder Lösen zu sichern. Dazu wird ein solcher radial auswärts federnd vorgespannter, die Lauffläche des Notradaufsatzes durchsetzender Schieber in einem Bereich des Notradaufsatzes angeordnet, der sich radial außerhalb einer radial beweglichen Haltekralle befindet. Im Betrieb des Notradaufsatzes wird dieser zunächst radial aus der Lauffläche hervorstehende Schieber dann durch den Kontakt mit der Fahrbahnoberfläche radial nach innen gedrückt und das radial innere Ende des Schiebers ist so gestaltet, dass es von radial außen auf die Haltekralle, genauer gesagt auf einen Haltekrallenkopf der Haltekralle, drückt. Da der Schieber durch die vorstehend bereits beschriebene Arretierungseinrichtung daran gehindert ist, sich im Anschluss an eine radial einwärts erfolgte Verlagerung wieder radial auswärts zu bewegen, führt dieses Anliegen des radial inneren Endes des Schiebers am Haltekrallenkopf dazu, dass der Haltekrallenkopf seine Position beibehält und sich nicht lockern oder lösen kann. Ein solcher Schieber stellt somit eine Haltekrallensicherungseinrichtung dar.

Aus der bisherigen Beschreibung des erfindungsgemäßen Notradaufsatzes sollte ersichtlich geworden sein, dass durch geeignetes Drehen der Antriebseinrichtung die oder jede bewegliche Haltekralle radial einwärts bewegt und dadurch die Montageeinheit auf der Felge des Fahrzeugrads verspannt wird. Um zu vermeiden, dass beim Verspannen der Montageeinheit auf der Felge des Fahrzeugrads ein zu hohes Drehmoment ausgeübt wird, welches beispielsweise zu einer unerwünschten Verformung des Felgenhorns führen könnte, sind bevorzugte Ausführungsformen des Notradaufsatzes mit einer Drehmomentbegrenzungseinrichtung für die Antriebseinrichtung ausgestattet. Wenn die Antriebseinrichtung ein mit dem Betätigungselement gekoppeltes oder koppelbares Antriebsritzel ist, dann kann dieses Antriebsritzel mit einer Hutmutter verbunden sein, in der sich eine solche Drehmomentbegrenzungseinrichtung befindet. Die Drehmomentbegrenzungseinrichtung kann beispielsweise eine aus mehreren übereinander angeordneten Federscheiben bestehende Rutschkupplung sein. Die Federscheiben können Erhöhungen und Vertiefungen aufweisen, die korrespondierend zueinander ausgeführt sind, sodass nach Überschreiten eines vorbestimmten Drehmoments sich die Drehmomentbegrenzungseinrichtung abschnittsweise weiterdreht, ohne dass dadurch jedoch das auf das Betätigungselement aufgebrachte Drehmoment erhöht wird.

Zum Schutz und auch zur Führung und/oder Lagerung des ringförmigen Betätigungselements weist die Montageeinheit vorzugsweise ein zumindest im Wesentlichen ringförmiges Gehäuse auf, in dem das Betätigungselement angeordnet ist. Zur Erleichterung des Anbringens der Montageeinheit am Fahrzeugrad ist bei bevorzugten Ausführungsformen ein das freie Zentrum des Gehäuses der Montageeinheit überspannender Haltegriff am Gehäuse befestigt, wobei der Haltegriff vorzugsweise bogenförmig nach außen gewölbt ist, um besser ergriffen werden zu können.

Mehrere Ausführungsbeispiele eines erfindungsgemäßen Notradaufsatzes werden im Folgenden anhand der beigefügten, schematischen Zeichnungen zusammen mit weiteren Ausführungsdetails näher erläutert. Es zeigt:
- Figur 1: eine Explosionsdarstellung einer ersten Ausführungsform eines erfindungsgemäßen Notradaufsatzes für ein Fahrzeugrad,
- Figur 2: den Notradaufsatz aus Figur 1 in einem an einem Fahrzeugrad montierten Zustand,
- Figur 3: die Ansicht aus Figur 2 mit teilweise demontierter Laufflächeneinheit,
- Figur 4: einen Querschnitt des an einem Fahrzeugrad befestigten Notradaufsatzes aus Figur 2 mit einer vergrößerten Detaildarstellung des Bereichs einer Haltekralle,
- Figur 5: eine Explosionsdarstellung einer zweiten Ausführungsform eines erfindungsgemäßen Notradaufsatzes,
- Figur 6: Detaildarstellungen des Zusammenspiels zwischen einer Betätigungsscheibe und Haltekrallen der zweiten Ausführungsform aus Figur 5,
- Figur 7: eine räumliche Teildarstellung einer dritten Ausführungsform eines erfindungsgemäßen Notradaufsatzes,
- Figur 8: eine räumliche Teildarstellung einer Abwandlung der dritten Ausführungsform des erfindungsgemäßen Notradaufsatzes,
- Figur 9: eine räumliche Teildarstellung eines ersten Ausführungsbeispiels einer vierten Ausführungsform eines erfindungsgemäßen Notradaufsatzes von schräg oben,
- Figur 10: die Teildarstellung aus Figur 9 von unten,
- Figur 11: eine Draufsicht auf das erste Ausführungsbeispiel der vierten Ausführungsform in einem an einem Fahrzeugrad befestigten Zustand,
- Figur 12: den Schnitt A-A aus Figur 1,
- Figur 13: eine räumliche Teildarstellung eines zweiten Ausführungsbeispiels der vierten Ausführungsform eines erfindungsgemäßen Notradaufsatzes von schräg oben,
- Figur 14: eine räumliche Teildarstellung eines dritten Ausführungsbeispiels der vierten Ausführungsform eines erfindungsgemäßen Notradaufsatzes von schräg oben,
- Figur 15: eine räumliche Teildarstellung eines vierten Ausführungsbeispiels der vierten Ausführungsform eines erfindungsgemäßen Notradaufsatzes von schräg oben,
- Figur 16: eine räumliche Teildarstellung eines fünften Ausführungsbeispiels der vierten Ausführungsform eines erfindungsgemäßen Notradaufsatzes von schräg oben,
- Figur 17: eine Detailansicht des fünften Ausführungsbeispiels der vierten Ausführungsform mit entfernter Betätigungsscheibe,
- Figur 18: eine räumliche Teildarstellung eines ersten Ausführungsbeispiels einer fünften Ausführungsform eines erfindungsgemäßen Notradaufsatzes von schräg oben in einem an einem Fahrzeugrad befestigten Zustand,
- Figur 19: ein gegenüber Figur 18 leicht abgewandeltes, zweites Ausführungsbeispiel der fünften Ausführungsform,
- Figur 20: eine räumliche Ansicht eines erfindungsgemäßen Notradaufsatzes mit einem Handgriff,
- Figur 21: eine Draufsicht auf eine isoliert dargestellte Haltekralle eines erfindungsgemäßen Notradaufsatzes in einer Position, welche die Haltekralle beim Befestigen des Notradaufsatzes an einem Fahrzeugrad zunächst einnimmt,
- Figur 22: den Schnitt A-A aus Figur 21,
- Figur 23: eine Draufsicht auf eine modifizierte Haltekralle eines erfindungsgemäßen Notradaufsatzes,
- Figur 24: eine räumliche Darstellung der Haltekralle aus Figur 23,
- Figur 25: eine Draufsicht auf eine Haltekralle eines erfindungsgemäßen Notradaufsatzes mit einem Indikatorelement, welches eine korrekte Montage anzeigt,
- Figur 26: den Schnitt A-A aus Figur 25,
- Figur 27: einen Schnitt durch den das Indikatorelement aus Figur 26 aufweisenden Teil einer Haltekralle in einem korrekt an einem Fahrzeugrad montierten Zustand,
- Figur 28: eine Ansicht einer abgewandelten Haltekralle eines erfindungsgemäßen Notradaufsatzes,
- Figur 29: eine Detailansicht der Haltekralle aus Figur 28 in an einem Fahrzeugrad montierten Zustand,
- Figur 30: eine räumliche Darstellung einer als Doppelkralle ausgeführten Haltekralle,
- Figur 31: eine Draufsicht auf eine abgewandelte Ausführungsform einer Doppelkralle,
- Figur 32: eine räumliche, geschnittene Ansicht einer Ausführungsform eines erfindungsgemäßen Notradaufsatzes mit wenigstens einer zusätzlichen Sicherheitskralle,
- Figur 33: die Ansicht aus Figur 32 mit an der Felge des Fahrzeugrades verspannter Sicherheitskralle,
- Figur 34: eine Draufsicht auf eine Hutmutter zum Festschrauben einer Laufflächeneinheit an einer Montageeinheit eines erfindungsgemäßen Notradaufsatzes,
- Figur 35: einen Querschnitt durch die Hutmutter aus Figur 34 in unverschraubtem Zustand,
- Figur 36: die Querschnittsdarstellung aus Figur 35 in fest verschraubtem Zustand der Hutmutter,
- Figur 37: eine räumliche Darstellung einer sechsten Ausführungsform eines erfindungsgemäßen Notradaufsatzes mit selbsttätig verrastender Laufflächeneinheit von schräg oben,
- Figur 38: den Schnitt C-C aus Figur 37,
- Figur 39: einen Querschnitt durch eine Hutmutter für ein drehbares Antriebsritzel eines erfindungsgemäßen Notradaufsatzes, wobei die Hutmutter mit einer Drehmomentbegrenzungseinrichtung versehen ist, und
- Figur 40: eine auseinandergezogene Darstellung der Hutmutter aus Figur 39 mit einer abgewandelten Drehmomentbegrenzungseinrichtung.

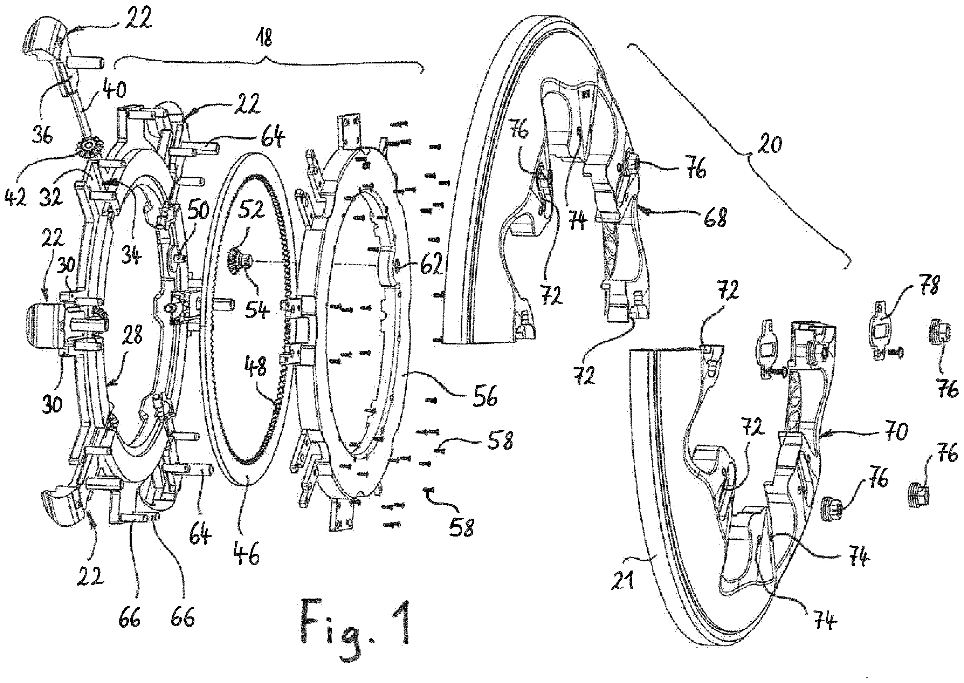

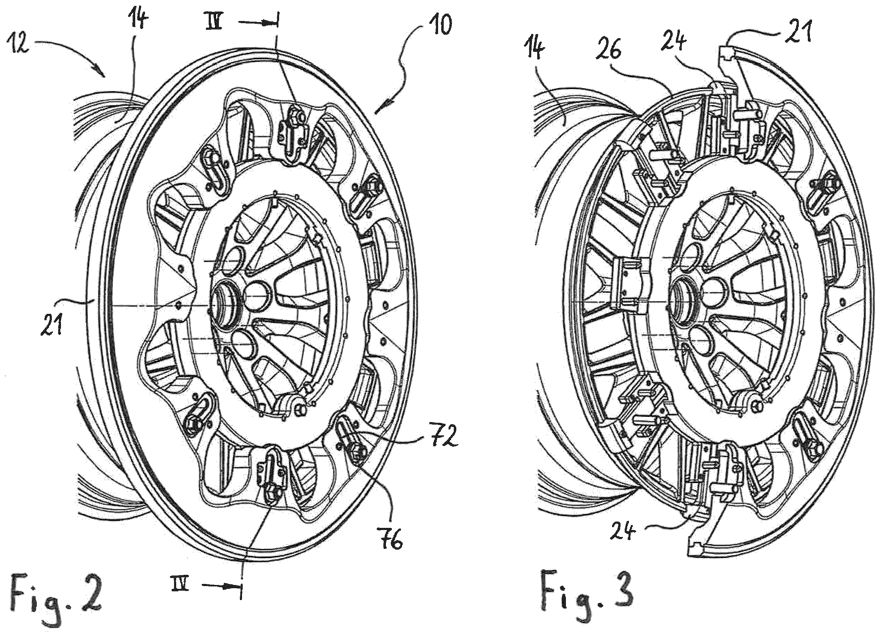

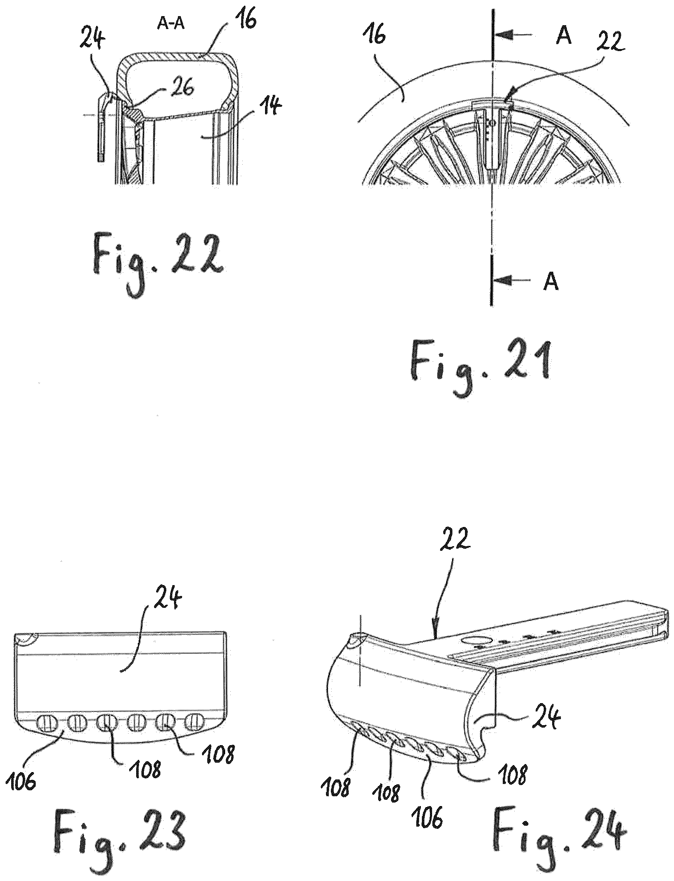

In den Figuren 1 bis 4 ist eine erste Ausführungsform eines Notradaufsatzes 10 für ein Fahrzeugrad 12 gezeigt, das eine Felge 14 und einen auf der Felge angeordneten Reifen 16 (nur in den Figuren 21 und 22 gezeigt) umfasst. In seinem Betriebszustand (siehe Figur 2) ist der Notradaufsatz 10 auf die Außenseite des Fahrzeugrads 12 aufgesetzt und an der Felge 14 des Fahrzeugrads 12 befestigt, um bei einem Reifenschaden eine Weiterfahrt zu ermöglichen. Obwohl in Figur 2 nicht dargestellt, befindet sich im Betriebszustand des Notradaufsatzes 10 normalerweise auch der beschädigte Reifen 16 noch auf der Felge 14, es sei denn, der Reifen 16 hätte sich bereits vollständig von der Felge 14 gelöst. Die Funktionsfähigkeit des Notradaufsatzes 10 am Fahrzeugrad 12 ist mit oder ohne Reifen 16 gegeben.

Der konstruktive Aufbau der ersten Ausführungsform des Notradaufsatzes 10 ist besser aus der Explosionsdarstellung in Figur 1 ersichtlich. Demnach umfasst der Notradaufsatz 10 eine im Wesentlichen kreisringförmige Montageeinheit 18, die zum Montieren des Notradaufsatzes 10 am Fahrzeugrad 12, genauer an dessen Felge 14, dient, und umfasst ferner eine im Wesentlichen ebenfalls kreisringförmige Laufflächeneinheit 20, die im Betriebszustand des Notradaufsatzes 10 mit einer Lauffläche 21 eine Fahrbahn kontaktiert, auf der das Fahrzeugrad 12 mit dem daran montierten Notradaufsatz 10 abrollen soll. In dem dargestellten Ausführungsbeispiel bilden die Montageeinheit 18 und die Laufflächeneinheit 20 zwei voneinander separate Baugruppen, die nacheinander am Fahrzeugrad 12 montiert werden. Bei anderen, hier nicht gezeigten Ausführungsformen können die Montageeinheit 18 und die Laufflächeneinheit 20 eine einzige miteinander verbundene Einheit bilden, die als solche an einem Fahrzeugrad 12 montiert wird.

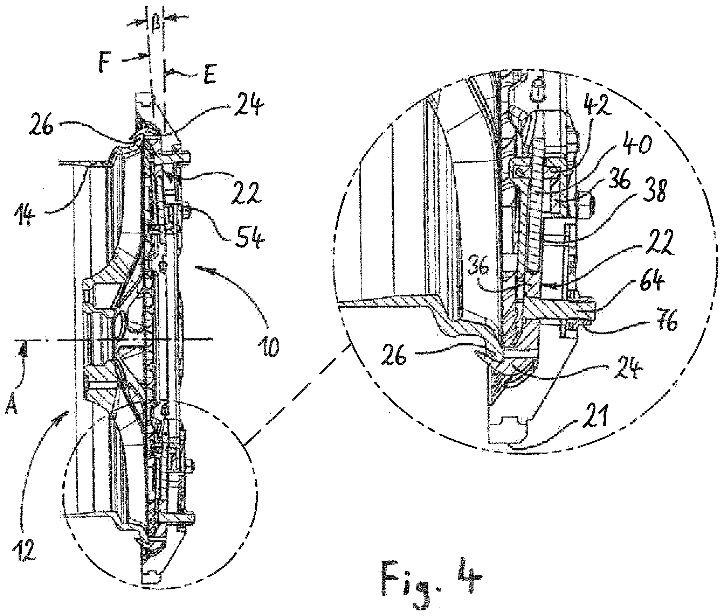

Zur Befestigung der Montageeinheit 18 am Fahrzeugrad 12 weist die Montageeinheit 18 im Ausführungsbeispiel gemäß Figur 1 sechs Haltekrallen 22 auf, deren Aufbau genauer aus den Figuren 23 bis 31 hervorgeht und die in jedem Fall dazu ausgebildet sind, mit einem hakenartig gestalteten Haltekrallenkopf 24 ein Felgenhorn 26 der Felge 14 zu hintergreifen und im montierten Zustand fest am Felgenhorn 26 anzuliegen. Dieser Zustand ist gut aus Figur 4 ersichtlich, die den Schnitt IV-IV aus Figur 2 zeigt. Die sechs Haltekrallen 22 sind über den Umfang der Montageeinheit 18 verteilt angeordnet und erstrecken sich jeweils radial nach außen. Die Haltekrallen 22 können in Umfangsrichtung gleichmäßig voneinander beabstandet angeordnet sein, sind im Ausführungsbeispiel gemäß Figur 1 jedoch in zwei Dreiergruppen angeordnet, von denen eine Gruppe aus drei Haltekrallen 22 sich bezüglich der Schnittlinie IV-IV auf der linken Seite und die andere Dreiergruppe auf der rechten Seite der Montageeinheit 18 befindet.

Im gezeigten Ausführungsbeispiel gemäß Figur 1 sind alle Haltekrallen 22 radial beweglich ausgeführt, um den Abstand der Haltekrallenköpfe 24 vom Mittelpunkt der Montageeinheit 18 verändern zu können. Hierzu ist jede Haltekralle 22 in einem im Wesentlichen kreisringförmigen Grundkörper 28 der Montageeinheit 18 radial geführt gelagert. Zur Führung dient im dargestellten Ausführungsbeispiel eine durch zwei seitliche Fortsätze 30 und einen Boden 32 begrenzte, radial verlaufende Nut 34 im Grundkörper 28. Jede Haltekralle 22 hat einen hier einstückig mit dem zugehörigen Haltekrallenkopf 24 ausgebildeten Haltearm 36, der in der Führungsnut 34 radial verschieblich angeordnet ist. An dem dem Haltekrallenkopf 24 entgegengesetzten Ende jeder Haltekralle 22 ist der Haltearm 36 mit einer Gewindebohrung 38 zur Aufnahme einer Gewindespindel 40 versehen, deren einer Endabschnitt in die Gewindebohrung 38 geschraubt ist. Am anderen oder in der Nähe des anderen Endes der Gewindespindel 40 ist auf der Gewindespindel 40 ein hier als Kegel (Zahn)rad 42 ausgebildetes Ritzel 44 angeordnet.

Zur Koppelung der radial gerichteten Einwärts- oder Auswärtsbewegung aller radial beweglicher Haltekrallen 22 dient ein kreisringförmiges Betätigungselement, welches gemäß der in Figuren 1 bis 4 dargestellten, ersten Ausführungsform eine kreisringförmige Betätigungsscheibe 46 mit einer an ihrem Innenumfang ausgebildeten Innenverzahnung 48 ist. Die Betätigungsscheibe 46 ist auf dem Grundkörper 28 der Montageeinheit 18 drehbar so gelagert, dass ihre Innenverzahnung 48 in Eingriff mit jedem Kegelrad 42 steht.

Um die Betätigungsscheibe 46 in Drehung versetzen zu können, ist auf einem axialen Lagerstift 50 des Grundkörpers 28 ein hier ebenfalls als Kegelrad ausgebildetes Antriebsritzel 52 drehbar gelagert, das mit der Innenverzahnung 48 der Betätigungsscheibe 46 in Eingriff steht. Zur Betätigung ist das Antriebsritzel 52 mit einer hier als Hutmutter 54 ausgeführten Mutter versehen, die sich axial über die Betätigungsscheibe 46 hinaus erstreckt. Ein im Wesentlichen kreisringförmiger Deckel 56 ist mit Schrauben 58 am Grundkörper 28 befestigt und bildet zusammen mit dem Grundkörper 28 ein Gehäuse 60 der Montageeinheit 18, in dem sich die Haltekrallen 22 (teilweise), die Kegelräder 42, die Betätigungsscheibe 46 und das Antriebsritzel 52 befinden. Die Hutmutter 54 des Antriebsritzels 52 ragt axial durch eine Öffnung 62 im Deckel 56 aus dem Gehäuse 60 heraus, sodass das Antriebsritzel 52 mittels eines Schraubenschlüssels oder mit einem anderen geeigneten Werkzeug in Drehung versetzt werden kann.

Eine solche Drehung des Antriebsritzels 52 führt zu einer Drehung der Betätigungsscheibe 46 um eine Drehachse A, die im Betriebszustand des Notradaufsatzes 10 mit der Drehachse des Fahrzeugrades 12 zusammenfällt (siehe Figur 4). Die Drehung der Betätigungsscheibe 46 überträgt sich auf die Kegelräder 42 der Haltekrallen 22, wodurch alle radial beweglichen Haltekrallen 22 je nach Drehrichtung des Antriebsritzels 52 synchron radial auswärts oder radial einwärts bewegt werden. Es versteht sich, dass die durch jeweils ein Kegelrad 42 und eine Gewindespindel 40 gebildete Spindelmutteranordnung entweder eine drehfeste Gewindespindel 40 und ein drehbar auf letzterer angeordnetes Kegelrad 42 aufweisen kann oder alternativ ein drehfest auf der Gewindespindel 40 angeordnetes Kegelrad 42, wobei dann die Gewindespindel 40 frei drehbar in der Gewindebohrung 38 des Haltearms 36 angeordnet sein muss.

Soweit im Rahmen der vorliegenden Beschreibung von einer radial beweglichen Haltekralle gesprochen wird, ist damit eine nicht notwendigerweise ausschließlich radiale Bewegung gemeint, sondern eine im Wesentlichen in Radialrichtung erfolgende Bewegung. Beispielsweise aus Figur 4 wird deutlich, dass die Bewegungsrichtung der Haltekrallen 22 nicht exakt in einer zur Drehachse A senkrechten Ebene E erfolgt, sondern in einer Ebene F, die unter einem Winkel β von 5° zur Ebene E geneigt verläuft. Mit anderen Worten, bei einer radialen Auswärtsbewegung bewegt sich jede Haltekralle 22 nicht nur radial auswärts, sondern auch axial etwas zur Felge 14 des Fahrzeugrades 12 hin und umgekehrt.

In einem Ausgangszustand der Montageeinheit 18 sind alle radial beweglichen Haltekrallen 22 so positioniert, dass die Montageeinheit 18 von außen auf das Fahrzeugrad 12 so aufgesetzt werden kann, dass jeder Haltekrallenkopf 24 sich im Bereich des Felgenhorns 26, jedoch radial etwas außerhalb desselben befindet. Die Montageeinheit 18 wird dann axial gegen das Fahrzeugrad 12 gedrückt und gleichzeitig wird das Antriebsritzel 52 so gedreht, dass die Haltekrallen 22 sich radial einwärts bewegen, sodass die Haltekrallenköpfe 24 das Felgenhorn 26 hintergreifen können. Das Drehen des Antriebsritzels 52 wird solange fortgesetzt, bis die Haltekrallenköpfe 24 in feste Anlage mit dem Felgenhorn 26 gelangt sind. In der Regel wird das Antriebsritzel 52 solange gedreht, bis ein zuvor festgelegtes Drehmoment, beispielsweise 60 Nm, erreicht wird, welches sicherstellt, dass jeder Haltekrallenkopf 24 fest am Felgenhorn 26 anliegt und somit die gesamte Montageeinheit 18 zuverlässig mit dem Fahrzeugrad 12 verbunden ist.

Auf die solchermaßen am Fahrzeugrad 12 befestigte Montageeinheit 18 wird sodann die Laufflächeneinheit 20 aufgesetzt. Hierzu dienen mehrere hier als Gewindebolzen ausgestaltete Aufnahmebolzen 64, die vom Gehäuse 60 der Montageeinheit 18 auf der vom Fahrzeugrad 12 abgewandten Seite axial oder zumindest im Wesentlichen axial hervorstehen. Im in Figur 1 gezeigten Ausführungsbeispiel ist jeweils ein solcher Aufnahmebolzen 64 am Haltearm 36 jeder Haltekralle 22 befestigt bzw. ausgebildet und somit nicht streng axial gerichtet, sondern unter dem Winkel β zur Ebene E geneigt. Bei anderen Ausführungsformen können die Aufnahmebolzen 64 vom Grundkörper 28 axial hervorstehen. Zur Positionierung der Laufflächeneinheit 20 auf der Montageeinheit 18 dienen eine Reihe von Positionierungsstiften 66, die hier am Grundkörper 28 befestigt bzw. ausgebildet sind und axial nach außen ragen.

Im in Figur 1 dargestellten Ausführungsbeispiel besteht die Laufflächeneinheit 20 aus zwei im Wesentlichen halbkreisringförmigen Segmenten 68 und 70, die nacheinander an der am Fahrzeugrad 12 befestigten Montageeinheit 18 angebracht werden. Zunächst wird das in Figur 1 obere Segment 68 auf die entsprechenden Aufnahmebolzen 64 und Positionierungsstifte 66 geschoben (jedes Segment 68 und 70 ist hierfür mit entsprechenden Durchbrechungen 72 und Positionierungsausnehmungen 74 versehen). Sodann wird auf die beiden oberen sich durch das Segment 68 erstreckenden Aufnahmebolzens 64 jeweils eine Hutmutter 76 geschraubt, um das Segment 68 gegen die Montageeinheit 18 zu pressen und an ihr zu befestigen. Durch Bewegen eines mit dem Fahrzeugrad 12 ausgestatteten Fahrzeuges (nicht gezeigt) nach vorne oder nach hinten wird dann das Fahrzeugrad 12 soweit gedreht, dass das zunächst oben befindliche Segment 68 in eine untere Position gelangt. Dabei gerät die Lauffläche 21 des Segments 68 in Kontakt mit der Fahrbahnoberfläche, auf der sich das Fahrzeugrad 12 befindet. Nun kann das zweite Segment 70 der Laufflächeneinheit 20 auf dieselbe Weise montiert werden wie das Segment 68. Nach Festziehen der zugehörigen Hutmuttern 76 mit einem vorbestimmten Drehmoment ist der Notradaufsatz 10 betriebsfähig.

In der in Figur 1 dargestellten Ausführungsform befinden sich zwei Durchbrechungen 72 auf der Trennlinie zwischen den beiden Segmenten 68 und 70 der Laufflächeneinheit 20. Um hier eine lasttragende Verbindung zwischen den beiden Segmenten 68, 70 herzustellen, ist das zweite Segment 70 im Bereich jeder geteilten Durchbrechung 72 mit einer Überbrückungslasche 78 versehen, die am zweiten Segment 70 befestigt ist und durch Festziehen der zugeordneten Hutmutter 76 gegen das erste Segment 68 gepresst wird.

Zum Abnehmen des Notradaufsatzes 10 wird in umgekehrter Reihenfolge vorgegangen, d.h. es werden zunächst die Hutmuttern 76 gelöst und die beiden Segmente 68, 70 der Laufflächeneinheit 20 nacheinander von der Montageeinheit 18 abgenommen. Sodann wird das Antriebsritzel 52 der Montageeinheit 18 in eine Richtung gedreht, die die Haltekrallen 22 dazu veranlasst, sich radial auswärts zu bewegen. Nachdem die Haltekrallenköpfe 24 sich aus dem Hintergriff mit dem Felgenhorn 26 gelöst haben, kann die Montageeinheit 18 vom Fahrzeugrad 12 abgenommen werden.

In einer hier nicht gezeigten Abwandlung der ersten Ausführungsform kann die Betätigungsscheibe 46 zusätzlich zur Innenverzahnung 48 eine Außenverzahnung aufweisen, die zum Eingriff mit dem Antriebsritzel 52 bestimmt ist. Das Antriebsritzel 52 ist bei dieser Ausführungsform im Gegensatz zur in Figur 1 gezeigten Anordnung radial außerhalb der Betätigungsscheibe 46 angeordnet. Die Innenverzahnung 48 dient bei dieser abgewandelten Ausführungsform lediglich dazu, die Drehbewegung der Betätigungsscheibe 46 auf die Kegelräder 42 zu übertragen.

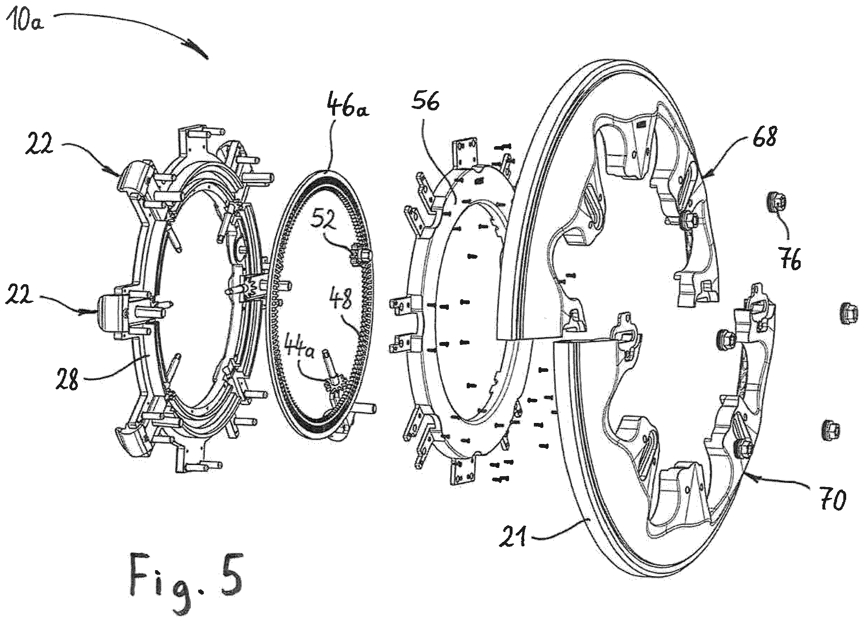

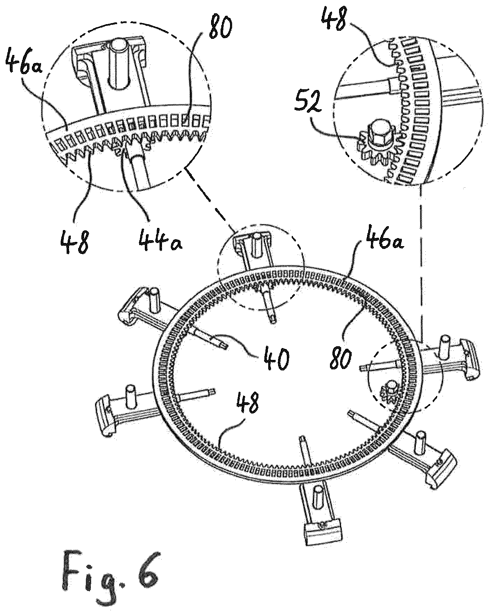

Die Figuren 5 und 6 zeigen eine gegenüber der ersten Ausführungsform etwas abgewandelte, zweite Ausführungsform eines Notradaufsatzes 10a. Der hauptsächliche Unterschied besteht in der Ausgestaltung der Betätigungsscheibe und der den Haltekrallen 22 zugeordneten Ritzeln. Zwar weist auch die kreisringförmige Betätigungsscheibe 46a der zweiten Ausführungsform eine Innenverzahnung 48 auf, jedoch dient diese lediglich dazu, mit dem Antriebsritzel 52 in Eingriff zu kommen, welches bei der zweiten Ausführungsform als normales Stirnrad ausgeführt ist. Die Übertragung einer Drehbewegung der Betätigungsscheibe 46a auf die radial beweglichen Haltekrallen 22 erfolgt mittels einer Reihe schlitzförmiger Durchbrechungen 80 der Betätigungsscheibe 46a, die mit Ritzeln 44a in Eingriff stehen, welche jeweils mit der Gewindespindel 40 der zugeordneten Haltekralle 22 verbunden sind. Im Gegensatz zur ersten Ausführungsform, in der die Ritzel 44 jeweils als Kegelrad ausgestaltet waren, sind die Ritzel 44a normale Stirnräder. Die Funktion dieser zweiten Ausführungsform entspricht derjenigen der ersten Ausführungsform und ist gut aus Figur 6 ersichtlich, die lediglich das Zusammenspiel zwischen Antriebsritzel 52, Betätigungsscheibe 46a und den Ritzeln 44a der Haltekrallen 22 darstellt.

Ähnlich einer vorstehend im Zusammenhang mit der ersten Ausführungsform erläuterten Abwandlung kann die zweite Ausführungsform so abgewandelt sein, dass das Antriebsritzel 52 nicht radial innerhalb der Betätigungsscheibe 46a angeordnet ist, sondern radial außerhalb derselben. Die Innenverzahnung 48 kann dann entfallen, es muss dafür allerdings eine Außenverzahnung an der Betätigungsscheibe 46a vorgesehen werden, damit eine Drehbewegung des Antriebsritzels 52 auf die Betätigungsscheibe 46a übertragen werden kann.

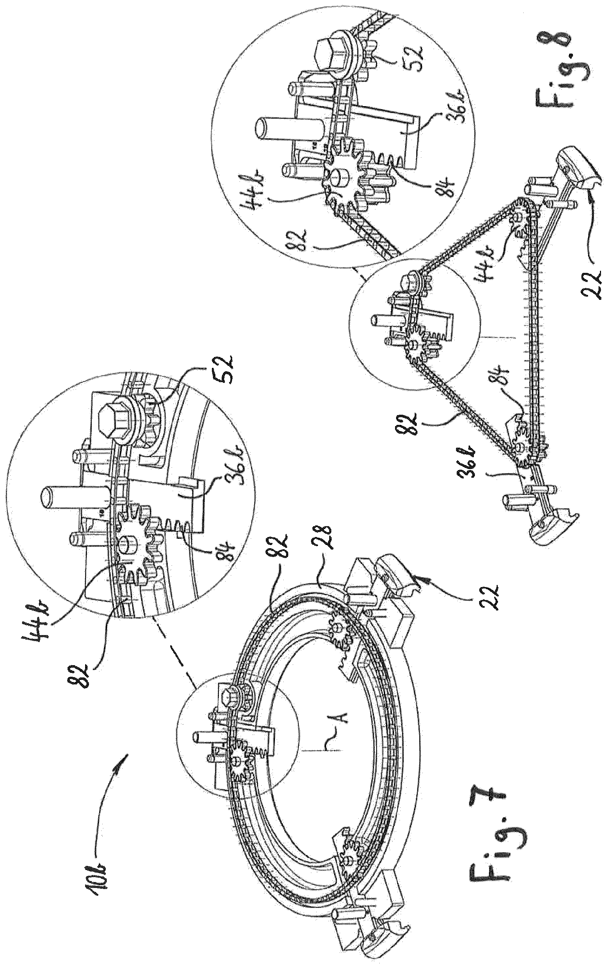

Die Figuren 7 und 8 zeigen eine dritte Ausführungsform eines Notradaufsatzes 10b, der sich von den beiden zuvor beschriebenen Ausführungsformen dadurch unterscheidet, dass anstelle einer ringförmigen Betätigungsscheibe eine Kette 82 als ringförmiges Betätigungselement Verwendung findet. Der besseren Übersichtlichkeit halber ist in den Figuren 7 und 8 nur die Montageeinheit 18 (und auch diese nur teilweise) dargestellt.

In Figur 7 ist die Kette 82 im Gehäuse der Montageeinheit 18 kreisringförmig angeordnet und geführt. Eine Drehbewegung des Antriebsritzels 52 dreht die Kette 82 um die Drehachse A und die Kette 82 überträgt diese Bewegung auf Übertragungsritzel 44b, die auf dem Grundkörper 28 drehbar gelagert sind und deren Drehachse parallel zur Drehachse A verläuft (im Unterschied hierzu ist die Drehachse der Ritzel 44 und 44a der ersten und zweiten Ausführungsform jeweils die im Wesentlichen radial verlaufende Mittellängsachse der zugeordneten Gewindespindel 40). In weiterem Unterschied zu den ersten beiden Ausführungsformen ist bei der dritten Ausführungsform der radial verlaufende Haltearm 36b an einer Seite mit einer zahnstangenartigen Verzahnung 84 versehen, die mit dem zugeordneten Übertragungsritzel 44b in Eingriff steht, welches seinerseits mit der Kette 82 in Eingriff ist. Jede Drehbewegung des Übertragungsritzels 44b wird somit in eine radiale Translationsbewegung der zugehörigen Haltekralle 22 umgesetzt, die je nach Drehrichtung des Antriebsritzels 52 entweder radial auswärts oder radial einwärts gerichtet ist.

Figur 8 zeigt ein abgewandeltes Ausführungsbeispiel der dritten Ausführungsform, bei dem die Kette 82 nicht in Kreisringform verläuft, sondern zwischen den Übertragungsritzeln 44b und dem Antriebsritzel 52 jeweils geradlinig verläuft.

Gemäß einer hier nicht dargestellten Abwandlung der dritten Ausführungsform kann eines der Übertragungsritzel 44b zugleich das Antriebsritzel bilden. Hierzu braucht lediglich eines der Übertragungsritzel 44b mit einer Mutter, beispielsweise der dargestellten Hutmutter 54, versehen zu werden. Das separate Antriebsritzel 52 aus Figur 7 und Figur 8 kann dann entfallen.

In einem weiteren Unterschied zu den ersten beiden Ausführungsformen weisen die in Figur 7 und 8 dargestellten Ausführungsbeispiele der dritten Ausführungsform nur drei radial bewegliche Haltekrallen 22 auf, die in Umfangsrichtung der Montageeinheit 18 gleichmäßig voneinander beabstandet sind. Es versteht sich jedoch, dass auch die dritte Ausführungsform mehr oder weniger radial bewegliche Haltekrallen 22 aufweisen kann.

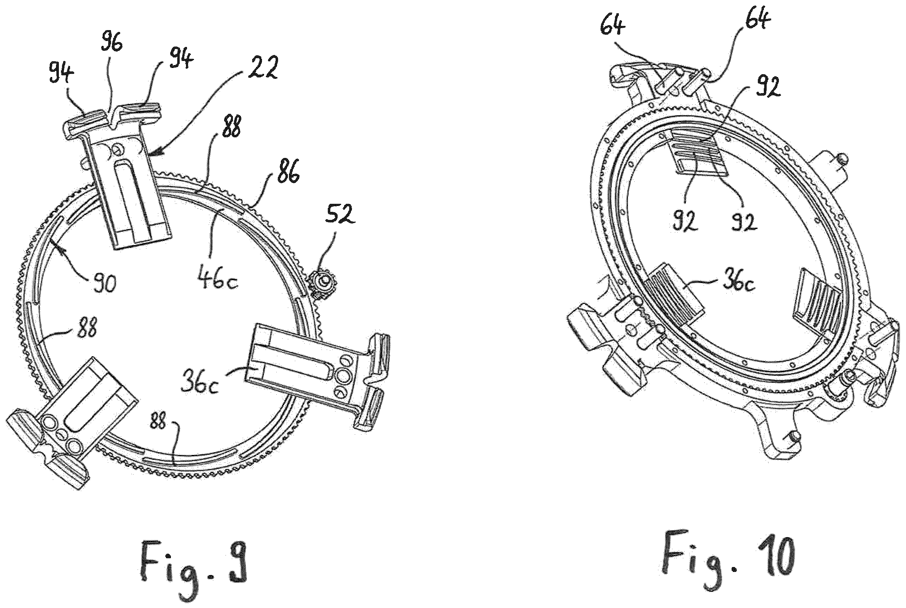

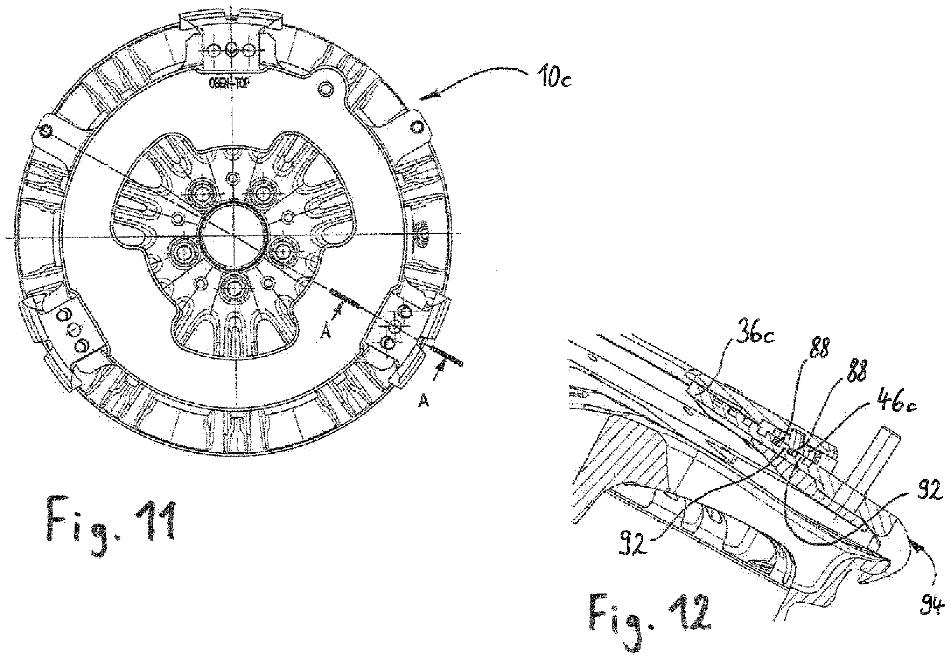

Die Figuren 9 bis 14 zeigen Ausführungsbeispiele einer vierten Ausführungsform eines Notradaufsatzes 10c. Der Unterschied zu den vorgenannten drei Ausführungsformen besteht in der Übertragung einer Drehbewegung des Antriebsritzels 52 auf die radial beweglichen Haltekrallen 22.

Ein erstes Ausführungsbeispiel der vierten Ausführungsform ist in den Figuren 9 und 10 gezeigt und weist eine kreisringförmige Betätigungsscheibe 46c auf, die mit einer Außenverzahnung 86 versehen ist, welche mit dem hier radial außerhalb der Betätigungsscheibe 46c angeordneten Antriebsritzel 52 in Eingriff steht. Auf der den Haltekrallen 22 zugewandten Seite der Betätigungsscheibe 46c sind in Umfangsrichtung der Betätigungsscheibe 46c gesehen mehrere spiralsegmentförmige Erhebungen 88 ausgebildet, die jeweils eine spiralsegmentförmige Kulisse 90 bilden. Auf der dieser Seite der Betätigungsscheibe 46c zugewandten Fläche jedes Haltearms 36c sind mehrere radial voneinander beabstandete Kulissensteine in Form einer kurzen spiralsegmentförmigen Rippe 92 ausgebildet, von denen jeweils zwei mit der durch die spiralsegmentförmige Erhebung 88 gebildeten Kulisse 90 auf der Betätigungsscheibe 46c zusammenwirken. Wie ohne weiteres ersichtlich führt eine durch eine Drehung des Antriebsritzels 52 bewirkte Drehung der Betätigungsscheibe 46c dazu, dass sich jede bewegliche Haltekralle 22 in Abhängigkeit der Drehrichtung des Antriebsritzels 52 entweder radial auswärts oder radial einwärts bewegt. Die mehreren spiralsegmentförmigen Rippen 92 am Haltearm 36c ermöglichen es, jede Haltekralle 22 in einem Ausgangszustand in einer radial weiter außen oder radial weiter innen liegenden Position anzuordnen, um so unterschiedlichen Durchmessern eines Fahrzeugrades 12 Rechnung tragen zu können (beispielsweise 15 Zoll als kleinste Größe und 19 Zoll als größte Größe eines Fahrzeugrades 12, auf das der Notradaufsatz 10c passt).

Im Unterschied zu den zuvor erläuterten drei Ausführungsformen ist beim in den Figuren 9 bis 12 gezeigten, ersten Ausführungsbeispiel der vierten Ausführungsform jede Haltekralle 22 als Doppelkralle mit zwei in Umfangsrichtung voneinander beabstandeten Haltekrallenelementen 94 ausgeführt, die durch einen Zwischenraum 96 voneinander getrennt und an dem gemeinsamen Haltearm 36c angebracht sind. Es versteht sich, dass solche als Doppelkralle ausgebildeten Haltekrallen auch bei den zuvor diskutierten Ausführungsformen und bei im Folgenden diskutierten Ausführungsformen Verwendung finden können. Im weiteren Unterschied zu den ersten drei Ausführungsformen sind beim ersten Ausführungsbeispiel der vierten Ausführungsform zwei Haltekrallen 22 mit jeweils zwei Aufnahmebolzen 64 versehen. Eine solche Ausgestaltung kann auch bei den zuvor diskutierten und bei im Folgenden noch beschriebenen Ausführungsformen verwendet werden.

Schließlich kann gemäß einer nicht dargestellten Abwandlung des ersten Ausführungsbeispiels der vierten Ausführungsform die Betätigungsscheibe 46c statt der Außenverzahnung 86 eine Innenverzahnung aufweisen, wobei dann das Antriebsritzel 52 analog zu den ersten beiden Ausführungsformen radial innerhalb der Betätigungsscheibe angeordnet ist.

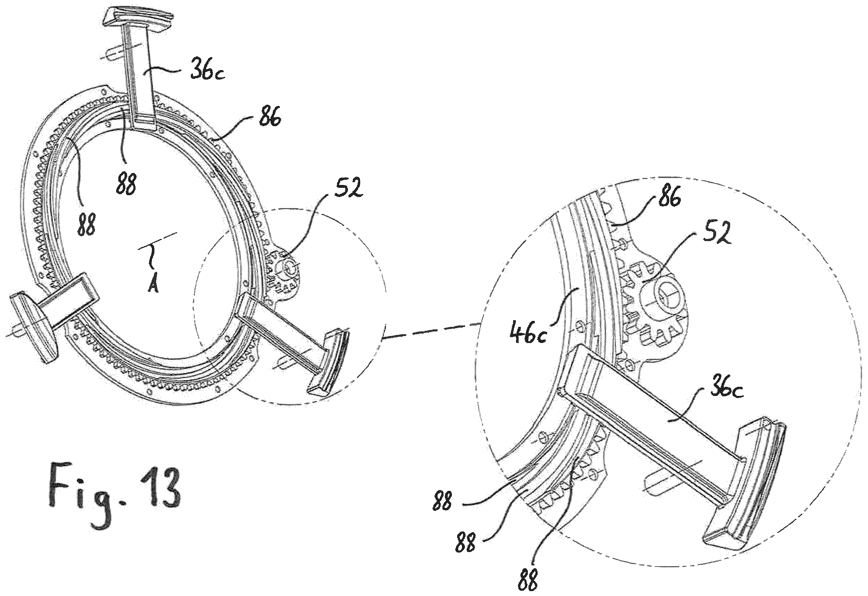

Figur 13 zeigt ein zweites Ausführungsbeispiel der vierten Ausführungsform, bei dem die spiralsegmentförmigen Erhebungen 88 sich in Umfangsrichtung der Betätigungsscheibe 46c gesehen jeweils etwas überlappen. Mit anderen Worten sind auf jedem einer radial beweglichen Haltekralle 22 zugehörigen Abschnitt der Betätigungsscheibe 46c mehrere durch die Erhebungen 88 gebildete, spiralsegmentförmige Kulissen 90 radial nebeneinander angeordnet. Hierdurch lässt sich eine bessere Kraftübertragung von der Betätigungsscheibe 46c auf jeden Haltearm 36c erreichen.

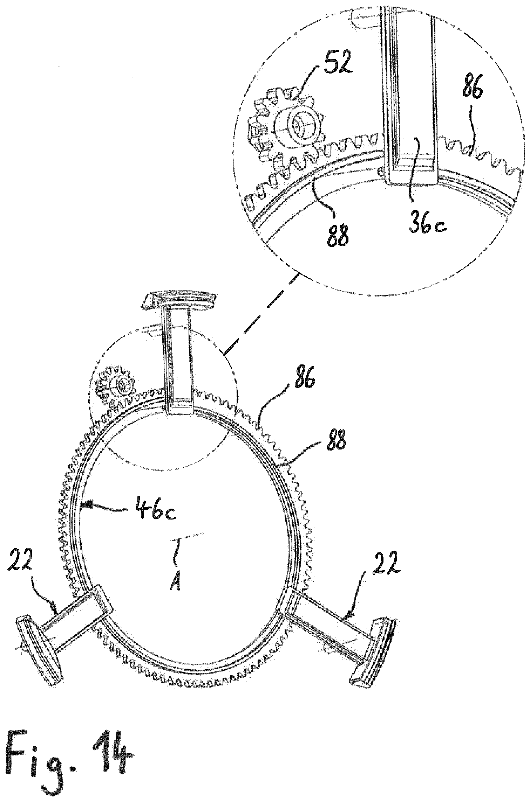

Figur 14 zeigt ein drittes Ausführungsbeispiel der vierten Ausführungsform, bei dem auf der Betätigungsscheibe 46c lediglich eine einzige, durchgehende spiralsegmentförmige Erhebung 88 angeordnet ist. Es versteht sich, dass dann jeder Haltearm 36c nur zwei spiralsegmentförmige Rippen 92 als Kulissensteine aufzuweisen braucht (aber auch mehr als nur zwei Rippen 92 aufweisen kann).

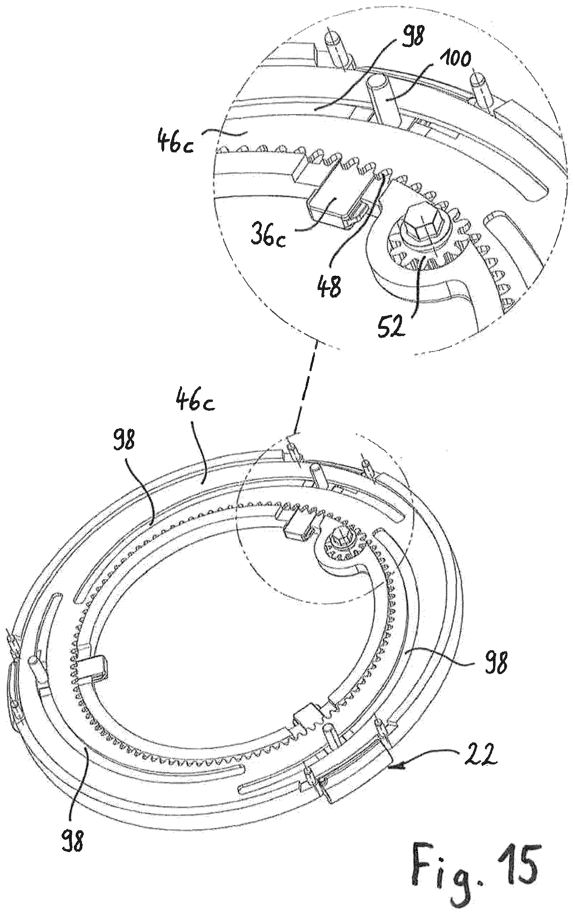

Die Figuren 15 bis 17 zeigen ein viertes und fünftes Ausführungsbeispiel der vierten Ausführungsform, bei denen die wenigstens eine bzw. jede spiralsegmentförmige Kulisse 90 durch jeweils eine spiralsegmentförmige Durchbrechung 98 der Betätigungsscheibe 46c gebildet ist. Beispielsweise kann statt der einzigen in Zusammenhang mit dem vorhergehenden Ausführungsbeispiel beschriebenen spiralsegmentförmigen Erhebung 88 die Betätigungsscheibe 46c eine einzige durchgehende spiralsegmentförmige Durchbrechung 98 aufweisen.

In dem in Figur 15 dargestellten vierten Ausführungsbeispiel der vierten Ausführungsform weist die Betätigungsscheibe 46c in Umfangsrichtung der Betätigungsscheibe gesehen drei spiralsegmentförmige Durchbrechungen 98 auf, die jeweils zum Zusammenwirken mit einer Haltekralle 22 vorgesehen sind. Jede Haltekralle 22 ist dazu mit einem Kulissenstein in Form eines Bolzens 100 versehen, der am Haltearm 36c befestigt bzw. ausgebildet und in der zugehörigen spiralsegmentförmigen Durchbrechung 98 geführt ist. Analog zur Funktion der ersten drei Ausführungsbeispiele der vierten Ausführungsform wird auch beim vierten Ausführungsbeispiel jede Drehbewegung des hier radial innerhalb der Betätigungsscheibe 46c angeordneten Antriebsritzels 52 durch die spiralsegmentförmigen Kulissen 90 in eine radial gerichtete Translationsbewegung der Haltekrallen 22 umgesetzt. Es versteht sich, dass anstelle des radial innerhalb der Betätigungsscheibe angeordneten Antriebsritzels 52 auch ein radial außerhalb der Betätigungsscheibe angeordnetes Antriebsritzel Verwendung finden kann, dann in Verbindung mit einer Außenverzahnung der Betätigungsscheibe 46c (deren Innenverzahnung kann dann entfallen).

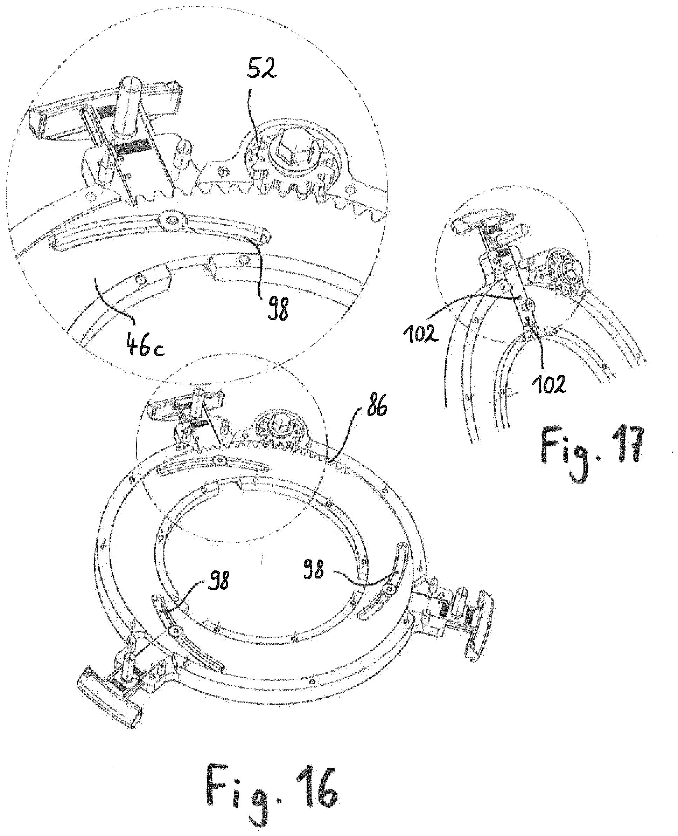

Figur 16 und 17 zeigen ein fünftes Ausführungsbeispiel der vierten Ausführungsform, wiederum mit drei in Umfangsrichtung der Betätigungsscheibe voneinander beabstandeten spiralsegmentförmigen Durchbrechungen 98, deren Steigung beim fünften Ausführungsbeispiel allerdings steiler gewählt ist als beim vierten Ausführungsbeispiel. Dies ermöglicht es, eine Verzahnung der Betätigungsscheibe 46c, die hier als Außenverzahnung 86 ausgebildet ist, nur auf einem Teil des Umfangs der Betätigungsscheibe 46c vorzusehen, da eine weitergehende Verzahnung zum Verfahren des maximal möglichen radialen Verschiebeweges der Haltekrallen 22 nicht erforderlich ist. Figur 17 illustriert, dass der Haltearm 36c jeder Haltekralle 22 durch das Vorsehen radial voneinander beabstandeter Befestigungslöcher 102 in verschiedenen radialen Positionen bezüglich der Betätigungsscheibe 46c montiert werden kann, um eine Anpassung an unterschiedliche Rad- bzw. Felgengrößen zu ermöglichen.

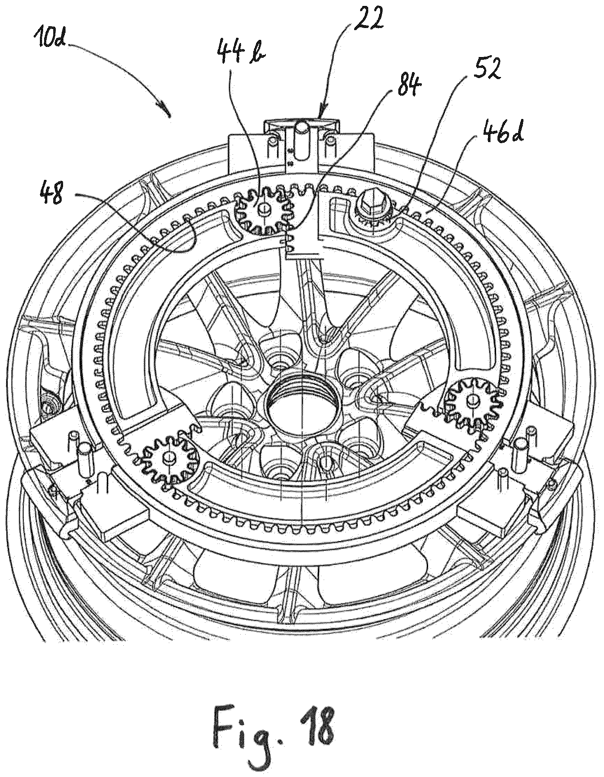

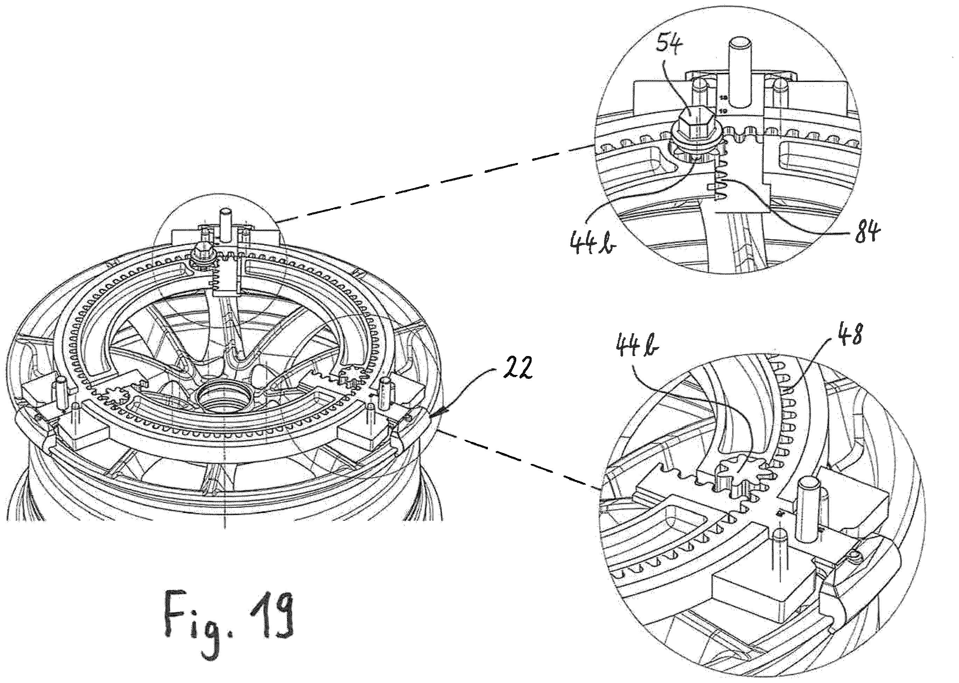

Die Figuren 18 und 19 zeigen eine fünfte Ausführungsform eines Notradaufsatzes 10d mit einer innenverzahnten kreisringförmigen Betätigungsscheibe 46d, die analog zur dritten Ausführungsform über Übertragungsritzel 44b und zahnstangenartige Verzahnungen 84 eine Drehung des Antriebsritzels 52 auf die Haltekrallen 22 überträgt bzw. in eine Radialbewegung der Haltekrallen 22 umsetzt. Figur 19 zeigt eine Abwandlung dieses fünften Ausführungsbeispiels, bei dem das in Figur 18 obere Übertragungsritzel 44b mit einer Hutmutter 54 versehen worden ist, sodass es zugleich als Antriebsritzel 52 dienen kann. Das in Figur 18 gezeigte, separate Antriebsritzel 52 ist damit überflüssig.

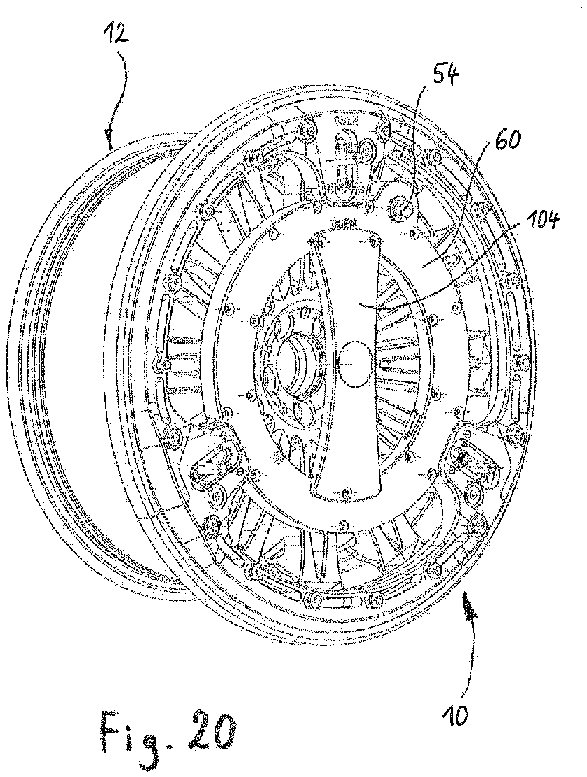

Figur 20 zeigt einen an einem Fahrzeugrad 12 montierten Notradaufsatz 10 beispielsweise gemäß der ersten oder zweiten Ausführungsform, bei dem zur Erleichterung einer Anbringung der Montageeinheit 18 am Fahrzeugrad das Gehäuse 60 der Montageeinheit 18 mit einem Haltegriff 104 versehen ist, der das freie Zentrum des Gehäuses 60 überspannt, am Gehäuse 60 befestigt ist und leicht bogenförmig nach außen gewölbt ist. Ein solcher oder ähnlicher Haltegriff 104 ermöglicht es, die Montageeinheit 18 während der Montage an einem Fahrzeugrad 12 einfacher zu halten und gegen das Fahrzeugrad 12 bzw. die Felge 14 zu drücken. Ein solcher oder ähnlicher Haltegriff 104 kann auch bei den übrigen zuvor diskutierten Ausführungsformen Verwendung finden.

Die Figuren 21 und 22 zeigen zum besseren Verständnis des Befestigungsvorgangs der Haltekrallen 22 eine einzelne Haltekralle 22 in einem Zustand, den jede Haltekralle 22 zu Beginn einer Befestigung der Montageeinheit 18 an einem Fahrzeugrad 12 einnimmt. Dabei zeigt Figur 22 den Schnitt A-A aus Figur 21. Insbesondere aus Figur 22 lässt sich gut erkennen, dass das hakenartig gewölbte, freie Ende des Haltekrallenkopfes 24 in einen Zwischenraum eingeführt werden muss, der zwischen dem Reifen 16 und dem Felgenhorn 26 der Felge 14 vorhanden ist, damit der Haltekrallenkopf 24 das Felgenhorn 26 hintergreifen kann. Um dieses Einführen des vorderen Bereichs des Haltekrallenkopfes 24 zu erleichtern, kann ein das freie Ende des Haltekrallenkopfes 24 umfassender Endabschnitt 106 auf seiner dem Reifen 16 zugewandten Oberfläche mit einer oder mehreren Ausnehmungen 108 versehen sein. Diese hier näherungsweise kalottenförmig ausgestalteten Ausnehmungen 108 ermöglichen es beim Einführen des Haltekrallenkopfes 24 in den genannten Zwischenraum, dass sich ein Teil des Gummimaterials des Reifens 16 in die Ausnehmungen 108 drückt und dadurch den Druck vermindert, der zum Einführen des Haltekrallenkopfes 24 in den genannten Zwischenraum aufgewandt werden muss. Die Ausnehmungen 108 führen somit zu einer Montageerleichterung.

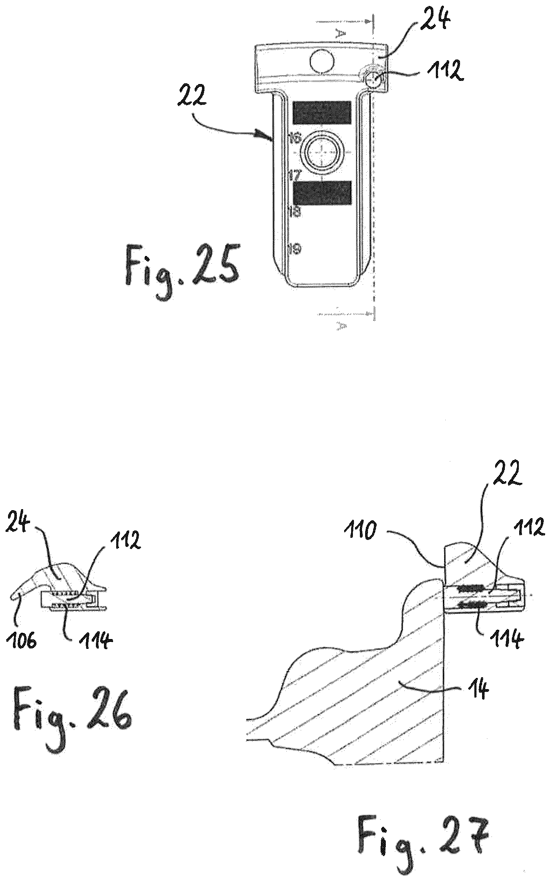

Um besser feststellen zu können, ob eine Montageeinheit 18 korrekt an einem Fahrzeugrad 12 bzw. einer Felge 14 befestigt worden ist, ist mindestens eine Haltekralle 22 (vorzugsweise jedoch jede radial bewegliche Haltekralle 22) mit einer Anzeigeeinrichtung versehen, die einen korrekt montierten Zustand signalisiert. Wie in den Figuren 25 bis 27 dargestellt, ist jede Haltekralle 22 mit einer radial verlaufenden Anschlagfläche 110 versehen, mit der sie im korrekt montierten Zustand des Notradaufsatzes an einer Außenseite der Felge 14 anliegt. Im Bereich dieser radialen Anschlagfläche 110 befindet sich ein hier stiftförmiges, die Haltekralle im Bereich der Anschlagfläche 110 axial durchsetzendes Indikatorelement 112, welches durch eine Feder 114, die in einer das Indikatorelement 112 aufnehmenden Bohrung angeordnet ist, so vorgespannt ist, dass im nicht montierten Zustand der Haltekralle 22 das der Felge 14 zugewandte Ende des Indikatorelements 112 aus der radialen Anschlagfläche 110 hervorsteht. Das entgegengesetzte, andere Ende des Indikatorelements 112, welches als Indikator dient, befindet sich dann von außen gesehen tief in der erwähnten Bohrung und ist deshalb von außen nicht oder nur schlecht sichtbar (siehe Figur 26).

Bei korrekter Montage der Montageeinheit 18 liegt die Anschlagfläche 110 jeder Haltekralle 22 an der Außenseite der Felge 14 an, was dazu führt, dass das der Felge zugewandte Ende des Indikatorelements 112 nunmehr bündig mit der Anschlagfläche 110 angeordnet ist. Durch das Hineindrücken des Indikatorelements 112 in die Aufnahmebohrung wird das als Indikator dienende, axial äußere Ende des Indikatorelements 112 so verlagert, dass es von außen gut sichtbar ist und dadurch den korrekten Montagezustand signalisiert. Beispielsweise kann dieses Ende des Indikatorelements 112 mit grüner Farbe markiert sein, um durch Erscheinen der grünen Markierung in dem von außen sichtbaren Teil der Aufnahmebohrung die korrekte Montage anzuzeigen.

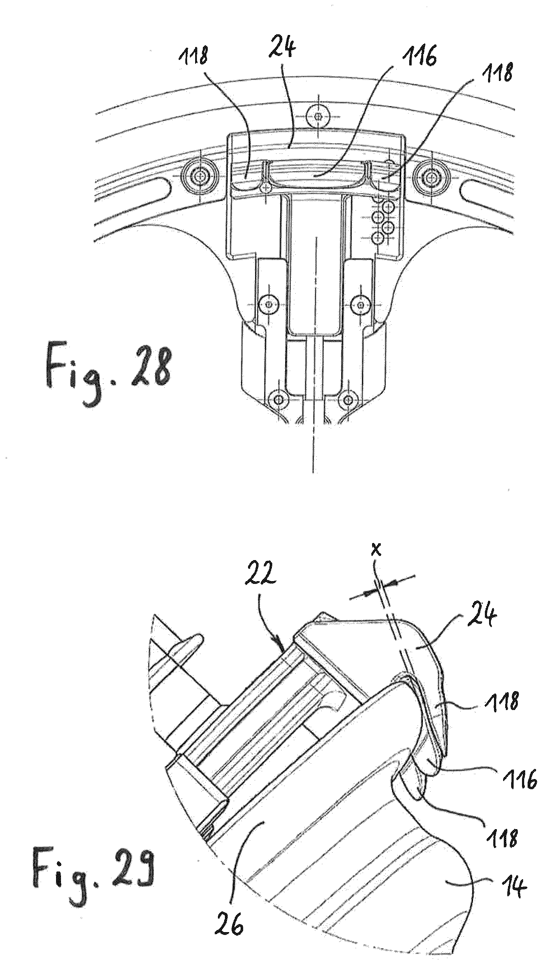

Die Figuren 28 und 29 erläutern eine abgewandelte Ausführungsform einer Haltekralle 22. Eine solche abgewandelte Haltekralle 22, die an jeder der zuvor erläuterten Ausführungsformen und Ausführungsbeispiele zum Einsatz kommen kann, weist einen mittleren Kontaktabschnitt 116 zur Kontaktierung des Felgenhorns 26 auf sowie ferner mindestens einen (hier zwei) in Umfangsrichtung neben dem Kontaktabschnitt 116 angeordneten Sicherheitsabschnitt 118. Wie gut aus Figur 29 zu erkennen, liegt jeder Sicherheitsabschnitt 118 im Betriebszustand des Notradaufsatzes nicht am Felgenhorn 26 an, sondern hat einen kleinen Abstand x vom Felgenhorn 26, der im Bereich von 0,2 bis 0,5 mm liegen kann und vorzugsweise etwa 0,3 mm beträgt. Der Kontaktabschnitt 116 hingegen ist im Betriebszustand des Notradaufsatzes fest mit dem Felgenhorn 26 verspannt.

Kommt es im Betrieb des Notradaufsatzes durch Überlastung zu einem Bruch des Kontaktabschnitts 116, so führt dies nicht zu einem Versagen des Notradaufsatzes, denn der Sicherheitsabschnitt 118 oder die wie hier beidseits des Kontaktabschnitts 116 angeordneten Sicherheitsabschnitte 118 sorgen dafür, dass die Haltekralle 22 mit dem defekten Kontaktabschnitt 116 sich nicht vom Fahrzeugrad 12 lösen kann. In gewollter Weise kommt es allerdings durch den Abstand x zwischen jedem Sicherheitsabschnitt 118 und dem Felgenhorn 26 im weiteren Betrieb des Notradaufsatzes zu einem Klappergeräusch, welches einen Fahrer des betroffenen Fahrzeugs darauf hinweisen soll, dass mit dem Notradaufsatz etwas nicht in Ordnung ist.

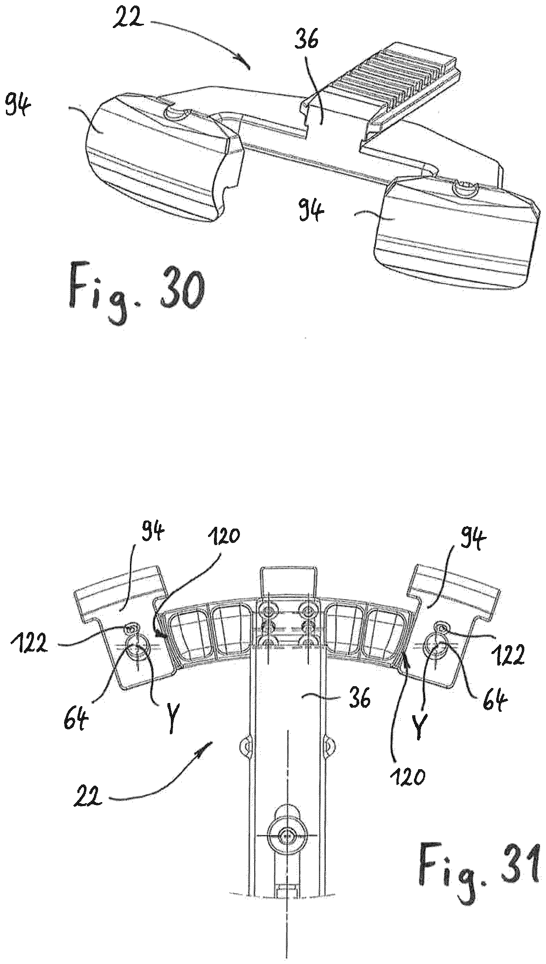

Figur 30 zeigt eine als Doppelkralle ausgeführte Haltekralle 22 mit zwei Haltekrallenelementen 94, die im Gegensatz zur in den Figuren 9 und 10 gezeigten Ausführung in Umfangsrichtung weiter voneinander beabstandet sind. Jedes Haltekrallenelement 94 kann wie zuvor im Zusammenhang mit den Figuren 28 und 29 erläutert mit einem Kontaktabschnitt 116 und mindestens einem Sicherheitsabschnitt 118 ausgebildet sein.

Figur 31 zeigt eine Draufsicht auf eine nochmals abgewandelte Ausführungsform eines als Doppelkralle ausgestalteten Haltekralle 22, bei der jedes Haltekrallenelement 94 ein separates Element darstellt, das an dem gemeinsamen Haltearm 36 so montiert ist, dass es sich um ein geringes Ausmaß um eine Achse Y drehen kann, die senkrecht zu einer durch den gemeinsamen Haltearm 36 aufgespannten Ebene verläuft. Das Ausmaß der möglichen Drehbewegung jedes Haltekrallenelements 92 ist durch die ballige Ausgestaltung einer seitlichen Anschlagfläche 120 am Haltearm 36 und ein in Umfangsrichtung verlaufendes Langloch 122 festgelegt, in dem sich ein Fixierstift (nicht dargestellt) befindet, welcher als Anschlag für die Drehbewegung des Haltekrallenelements 94 dient. Jedes Haltekrallenelement 94 ist wie in Figur 31 dargestellt auf dem Aufnahmebolzen 64 drehbar gelagert.

Die in Figur 31 gezeigte Ausführungsform einer Doppelkralle ermöglicht es auch bei in Umfangsrichtung weiter auseinanderliegenden Haltekrallenelementen 94, dass jedes Haltekrallenelement 94 im Zuge der radialen Einwärtsbewegung einer Haltekralle 22 in korrekte Anlage mit dem Felgenhorn 26 gerät. Etwaige Winkelfehler, die beispielsweise aus Fertigungsungenauigkeiten resultieren können, werden durch ein beim Zuspannen selbsttätig erfolgendes Verdrehen der Haltekrallenelemente ausgeglichen.

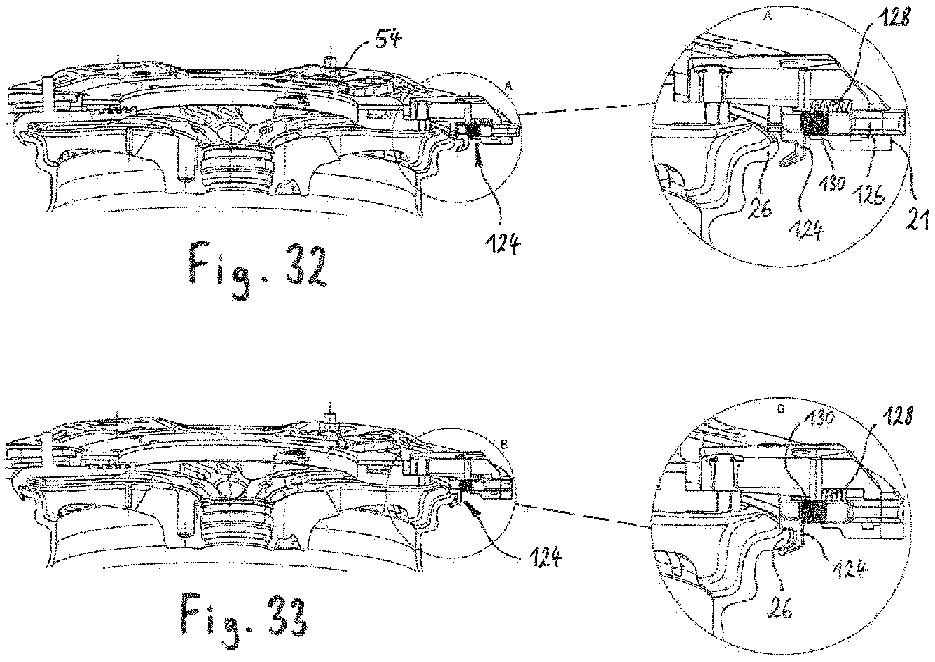

Die Figuren 32 und 33 zeigen eine Ausführungsform eines Notradaufsatzes 10 gemäß einer der zuvor erläuterten Ausführungsbeispiele, die zusätzlich zu den radial beweglichen Haltekrallen 22 zumindest eine und vorzugsweise mehrere selbstverspannende Sicherheitskrallen 124 aufweist. Jede Sicherheitskralle 124 ist Teil der Laufflächeneinheit 20 und kann somit nicht durch eine Drehung des Antriebsritzels 52 radial einwärts oder radial auswärts bewegt werden. Stattdessen hat jede Sicherheitskralle 124 einen Betätigungsschieber 126, der die Lauffläche 21 der Laufflächeneinheit 20 durchsetzt und in einem Ausgangszustand radial aus der Lauffläche 21 hervorsteht (siehe Figur 32). Der Betätigungsschieber 126 ist durch eine auf ihn wirkende Feder 128 radial auswärts vorgespannt. In diesem Ausgangszustand der Sicherheitskralle 124 befindet sich die Sicherheitskralle 124 noch nicht im Eingriff mit der Felge 14 des Fahrzeugrades 12.

Nach erfolgter Montage des Notradaufsatzes 10 kommt es im Betrieb des Notradaufsatzes jedoch dazu, dass die Lauffläche 21 auf einer Fahrbahnoberfläche abrollt und dadurch der Betätigungsschieber 126 radial nach innen gedrückt wird, wodurch sich jede Sicherheitskralle 124 hinter das Felgenhorn 26 der Felge 14 presst. Es wird somit eine Stellung der Sicherheitskralle 124 erreicht, die der einer korrekt montierten Haltekralle 22 entspricht. Zum Erreichen dieser Position ist allerdings kein Zutun eines Benutzers eines solchermaßen ausgestatteten Notradaufsatzes 10 erforderlich, vielmehr kommt es im Betrieb des Notradaufsatzes von allein zum Erreichen dieser Position, weshalb die Sicherheitskralle 124 als selbstverspannend bezeichnet wird.

Um zu verhindern, dass eine in Eingriff mit dem Felgenhorn 26 gelangte Sicherheitskralle 124 sich ungewollt wieder löst, ist jede Sicherheitskralle 124 mit einer Arretierungseinrichtung ausgestattet, die nach einer radial innen erfolgten Verlagerung des Betätigungsschiebers 126 verhindert, dass sich der Betätigungsschieber 126 radial auswärts bewegt. Im dargestellten Ausführungsbeispiel ist diese Arretierungseinrichtung durch eine seitliche Verrippung 130 am Betätigungsschieber 126 gebildet, die mit einem schräg nach radial innen angestellten Blech aus Federstahl (nicht gezeigt) zusammenwirkt, wobei das freie Ende dieses Federstahlblechs sich rastend in die seitliche Verrippung 130 legt und dadurch eine Rückwärtsbewegung des Betätigungsschiebers 126 nach radial auswärts verhindert. Eine solche Verrippung 130 kann alternativ oder zusätzlich auch auf der entgegengesetzten Seite des Betätigungsschiebers 126 vorhanden sein (ebenfalls im Zusammenwirken mit einem Federstahlblech).

Eine Sicherheitskralle 124 der beschriebenen Art ist in Umfangsrichtung des Notradaufsatzes gesehen vorzugsweise zwischen jeweils zwei radial beweglichen Haltekrallen 22 angeordnet. Beispielsweise kann sich bei Ausführungsformen mit drei radial beweglichen Haltekrallen 22 jeweils eine Sicherheitskralle 124 zwischen zwei in Umfangsrichtung benachbarten Haltekrallen 22 befinden, sodass eine solche Ausführungsform insgesamt drei radial bewegliche Haltekrallen 22 und drei Sicherheitskrallen 124 aufweist. Andere Kombinationen sind selbstverständlich möglich.

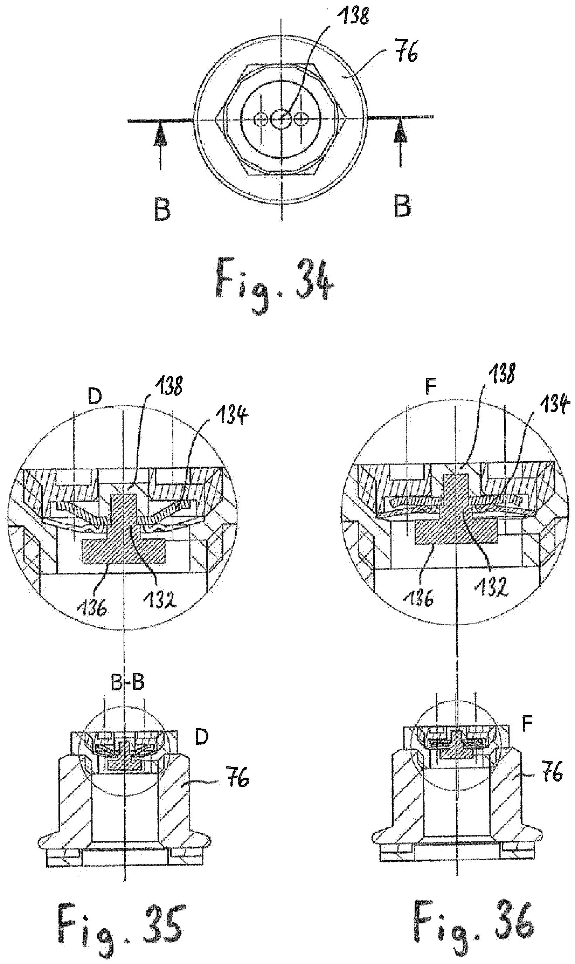

Wie bereits erläutert wird die Laufflächeneinheit 20 an der Montageeinheit 18 in manchen Ausführungsformen dadurch befestigt, dass Muttern auf als Gewindebolzen ausgeführten Aufnahmebolzen mit einem vorbestimmten Drehmoment festgezogen werden. Damit ein Benutzer einfach erkennen kann, wann dieses vorgeschriebene Drehmoment erreicht ist, sind gemäß einer Ausführungsform diese Muttern als Hutmuttern 76 ausgebildet, wobei in jeder Hutmutter 76 eine optische und/oder akustische Anzeigeeinrichtung enthalten ist, die einen korrekten Montagezustand signalisiert. Ein Ausführungsbeispiel einer solchen Hutmutter 76 ist in den Figuren 34 bis 36 dargestellt.

Figur 35 zeigt eine solche Hutmutter 76 in einer Ausgangsstellung. In der Hutmutter 76 befindet sich oben mittig angeordnet ein Stößel 132, der von einem Federblech 134 getragen ist, welches in der in Figur 35 gezeigten Ausgangsposition axial einwärts vorgespannt ist und sich an der oberen Innenseite der Hutmutter 76 abstützt. Die mit größerem Durchmesser ausgeführte Innenseite 136 des Stößels 132 ist dazu vorgesehen, mit dem freien Ende eines Aufnahmebolzens 64 (nicht gezeigt) in Kontakt zu geraten, auf den die Hutmutter 76 aufgeschraubt werden soll.

Kommt das freie Ende des Aufnahmebolzens 64 bei Erreichen des vorgeschriebenen Drehmoments in Kontakt mit der Innenseite 136 des Stößels 132, so wird die axial einwärts gerichtete Kraft des Federblechs 134 überschritten und der Stößel 132 springt axial auswärts in eine zweite Position, in der ein vorzugsweise farblich markiertes Indikatorelement 138 bündig mit der äußeren Oberfläche der Hutmutter 76 abschließt (siehe Figur 36). Das "Springen" des Federblechs 134 in die in Figur 36 wiedergegebene Position ist akustisch wahrnehmbar. Zudem zeigt das bündig mit der äußeren Oberfläche der Hutmutter 76 abschließende Indikatorelement 138 an, dass nunmehr der korrekte Montagezustand der Laufflächeneinheit 20 an der Montageeinheit 18 erreicht ist.

Wie aus den Figuren 35 und 36 und insbesondere aus der jeweils zugehörigen Detaildarstellung ersichtlich ist, sind der Stößel 132, das Federblech 134 und das Indikatorelement 138 Bestandteil einer Anzeigeeinrichtung 131, die als Einheit in der Hutmutter 76 befestigt ist. Ein Gehäuse der Anzeigeeinrichtung 131 besteht aus einer Ringmutter 133 und einem Deckel 135. Der Deckel 135 ist von oben in die Ringmutter 133 geschraubt und verspannt das Federblech 134 gegen den Stößel 132. Die Ringmutter 133 ist ihrerseits in ein Innengewinde der oben offenen Hutmutter 76 geschraubt (die Mutter 76 wird also hier erst durch den Deckel 135 zur Hutmutter). In einem zentralen Loch im Deckel 135 ist das Indikatorelement 138 geführt.

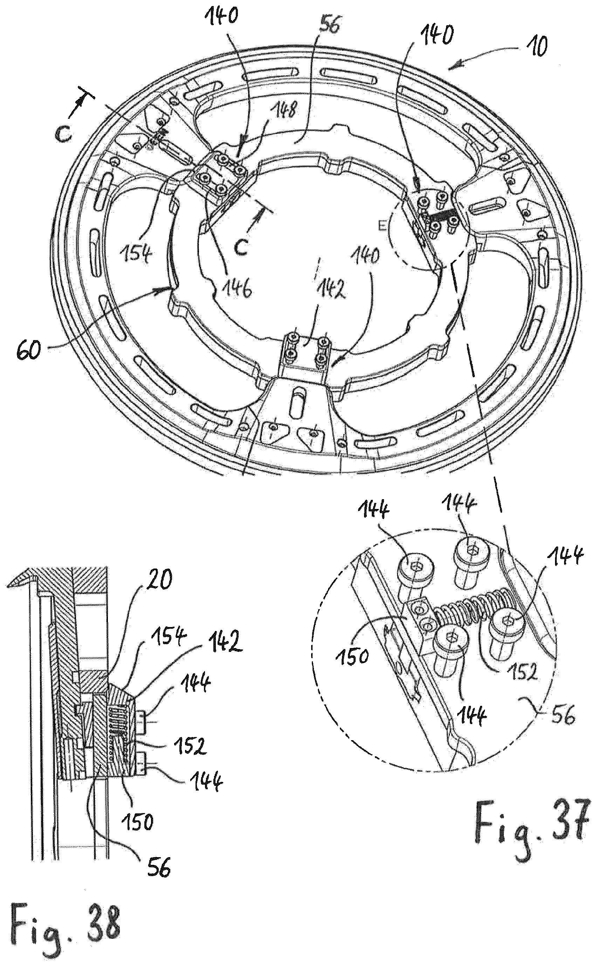

Die Figuren 37 und 38 zeigen eine sechste Ausführungsform eines erfindungsgemäßen Notradaufsatzes, bei der die Laufflächeneinheit 20 bzw. deren Segmente (beispielsweise die zuvor beschriebenen Segmente 68 und 70) nicht durch Verschrauben an der Montageeinheit 18 befestigt werden. Stattdessen ist die sechste Ausführungsform mit Rasteinrichtungen versehen, die auf der vom Fahrzeugrad 12 abgewandten Seite des Notradaufsatzes angeordnet sind. Bei der in den Figuren 37 und 38 gezeigten Ausführungsform umfasst jede Rasteinrichtung 140 einen radial beweglichen Schieber 142, der auf der Außenseite des Gehäuses 60 der Montageeinheit 18, genauer auf dem Deckel 56 der Montageeinheit 18, mittels vier Schrauben 144 angebracht ist, von denen sich im gezeigten Ausführungsbeispiel zwei durch ein auf der Oberseite des Schiebers 142 ausgebildetes und im Wesentlich radial verlaufendes Langloch 146 erstrecken. Die anderen beiden Schrauben 144 erstrecken sich durch ein weiteres Langloch 148, das parallel zum ersten Langloch 146 verläuft. Wie gut aus der zur Figur 37 gehörenden, vergrößernden Detaildarstellung hervorgeht, befindet sich in jedem Schieber 142 ein Haltebock 150, der im gezeigten Ausführungsbeispiel am radial inneren Rand des Deckels 56 der Montageeinheit 18 befestigt ist, beispielsweise durch Schrauben, Nieten oder ähnliches, jedoch kann der Haltebock auch einstückig mit dem Deckel gegossen sein oder auf den Deckel 56 geschweißt sein. Der Haltebock 150 dient zur Abstützung einer Feder 152, die den Schieber 142 radial auswärts federnd vorspannt.

Die radial äußere Stirnseite jedes Schiebers 142 ist als eine schräge Auflauframpe oder -fläche 154 ausgebildet, die beim Montieren der Laufflächeneinheit 20 bzw. der Segmente 68, 70 der Laufflächeneinheit 20 mit einer zugeordneten Fläche oder Kante der Laufflächeneinheit 20 in Kontakt kommt, sodass beim Drücken der Laufflächeneinheit 20 oder eines Segments 68, 70 derselben in einer axial zur Montageeinheit 18 hin gerichteten Richtung der Schieber 142 zunächst radial einwärts verschoben wird, bis die vom Fahrzeugrad 12 abgewandte Außenseite der Laufflächeneinheit 20 die Unterseite des Schiebers 142 passiert hat. In diesem Moment bewegt sich der Schieber 142 aufgrund seiner radial auswärts wirkenden Federvorspannung wieder radial auswärts und die Unterseite des Schiebers 142 schiebt sich über die Außenseite der Laufflächeneinheit 20, wodurch die Laufflächeneinheit 20 oder ein Segment derselben in korrekt montierter Stellung arretiert ist. Der in Figur 38 wiedergegebene Schnitt durch einen Schieber 142 und umgebende Bauteile illustriert diesen verrasteten Zustand.

Will man eine solche selbsttätig verrastende Laufflächeneinheit 20 von der Montageeinheit 18 lösen, so brauchen lediglich die Schieber 142 radial einwärts in eine Stellung gedrückt zu werden, in der die Unterseite jedes Schiebers 142 nicht mehr mit der Außenseite der Laufflächeneinheit 20 überlappt.

Die in den Figuren 37 und 38 gezeigte, selbstverrastende Ausgestaltung ist an keine bestimmte Ausgestaltung eines Notradaufsatzes gebunden. Sie kann bei allen zuvor gezeigten und beschriebenen Ausführungsformen des Notradaufsatzes Verwendung finden und darüber hinaus auch bei hier nicht beschriebenen oder gezeigten Ausführungsformen eines Notradaufsatzes.

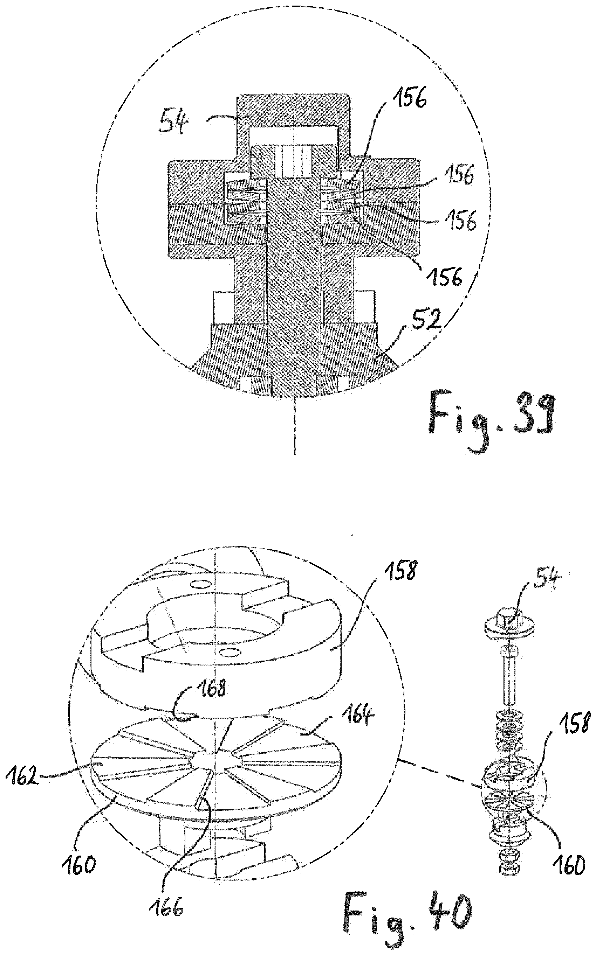

Wie ebenfalls bereits erläutert, wird bei einer Montage der Montageeinheit 18 an einem Fahrzeugrad 12 das Antriebsritzel 52 solange drehend betätigt, bis ein vorgeschriebenes Drehmoment erreicht ist, bei dem sichergestellt ist, dass alle radial beweglichen Haltekrallen 22 sicher am Felgenhorn 26 anliegen. Um ein übermäßig festes Verspannen der Haltekrallen 22 zu verhindern, ist bei manchen Ausführungsformen des Notradaufsatzes 10 das mit den Betätigungselement gekoppelte oder koppelbare Antriebsritzel 52 mit einer Drehmomentbegrenzungseinrichtung ausgestattet. Eine solche Drehmomentbegrenzungseinrichtung befindet sich gemäß einer in Figur 39 gezeigten Ausgestaltung in der Hutmutter 54 des Antriebsritzels 52 und besteht aus mehreren übereinander angeordneten und in gegenseitigem Kontakt befindlichen Federscheiben 156, die beim Drehen des Antriebsritzels 52 nach Art einer Rutschlamellenkupplung verhindern, dass mehr als ein vorbestimmtes Drehmoment in den Notradaufsatz 10 eingeleitet werden kann. Das Paket aus Federscheiben 156 überträgt eine jegliche Drehbewegung der Hutmutter 54 nur solange auf das Antriebsritzel 52, bis die durch eine entsprechende Vorspannung des Federpakets eingestellte Reibungskraft zwischen den Federscheiben 156 überschritten wird. Bei einem weiteren Drehen der Hutmutter 54 "rutschen" die einzelnen Federscheiben 156 relativ zueinander in Umfangsrichtung durch, sodass jede weitere Drehbewegung das Antriebsritzel 52 nicht mehr erreichen kann.

In Figur 40 ist eine alternative Ausgestaltung einer solchen Drehmomentbegrenzungseinrichtung gezeigt. Hier besteht die Rutschkupplung aus zwei einander zugewandten Kupplungsscheiben 158 und 160, die auf ihren einander zugewandten Flächen jeweils mit in Umfangsrichtung abwechselnd angeordneten tortenstückartigen Erhöhungen 162 und tortenstückartigen Vertiefungen 164 ausgebildet sind. Dabei ist in Anzugsdrehrichtung gesehen jede Flanke 166 einer Erhebung 162 sowie die zugehörige Flanke 168 der korrespondierenden Vertiefung 164 abgeschrägt ausgeführt, sodass ab Überschreiten eines Drehmoments, welches durch eine die Kupplungsscheiben 158, 160 aufeinander pressende Federkraft definiert ist, die Kupplungsscheibe 158 über die Kupplungsscheibe 160 zu rutschen beginnt, wodurch wie im zuvor beschriebenen Ausführungsbeispiel eine Weitergabe der Drehbewegung an das Antriebsritzel 52 verhindert wird.

## Patentansprüche

1. Notradaufsatz (10; 10a; 10b; 10c; 10d) für ein Fahrzeugrad (12), das eine Felge (14) und einen auf der Felge (14) angeordneten Reifen (16) umfasst, wobei der Notradaufsatz dazu vorgesehen ist, auf die Außenseite des Fahrzeugrads (12) aufgesetzt zu werden und in einem am Fahrzeugrad (12) befestigten Betriebszustand einen Fahrbetrieb bei eingeschränkter Reifenfunktion zu ermöglichen, wobei der Notradaufsatz eine Montageeinheit (18), die zum Montieren des Notradaufsatzes (10; 10a; 10b; 10c; 10d) am Fahrzeugrad dient, und eine im Wesentlichen kreisringförmige Laufflächeneinheit (20) aufweist, die in dem Betriebszustand eine Fahrbahn kontaktiert, auf der das Fahrzeugrad (12) abrollen soll, wobei die Montageeinheit (18) mit wenigstens zwei Haltekrallen (22) versehen ist, die zur Befestigung der Montageeinheit (18) an der Felge (14) des Fahrzeugrads (12) durch Hintergreifen des Felgenhorns (26) der Felge (14) ausgebildet sind, wobei wenigstens eine der Haltekrallen (22) zur Veränderung ihres Abstands vom Mittelpunkt der Montageeinheit (18) radial beweglich ausgeführt ist, wobei die Montageeinheit (18) ein ringförmiges Betätigungselement aufweist, das um eine im Betriebszustand des Notradaufsatzes mit der Fahrzeugradachse zusammenfallende Drehachse (A) drehbar ist und einen Teil eines Getriebes bildet, welches eine Drehung des Betätigungselements in eine Radialbewegung der oder aller radial beweglicher Haltekrallen (22) umsetzt, wobei die kreisringförmige Montageeinheit (18) ferner eine mit dem ringförmigen Betätigungselement gekoppelte oder koppelbare Antriebseinrichtung umfasst, deren Betätigung eine Drehung des ringförmigen Betätigungselements bewirkt, **dadurch gekennzeichnet, dass** die Montageeinheit (18) im Wesentlichen kreisringförmig ist.

2. Notradaufsatz nach Anspruch 1,
**dadurch gekennzeichnet, dass** das Betätigungselement eine Kette (82) ist und die Antriebseinrichtung ein drehbares Antriebsritzel (52) ist, welches mit der Kette (82) in Eingriff steht oder in Eingriff bringbar ist.

3. Notradaufsatz nach Anspruch 2,
**dadurch gekennzeichnet, dass** jede bewegliche Haltekralle (22) mit einem von der Haltekralle radial einwärts verlaufenden Haltearm (36b) versehen ist, der an einer Seite eine zahnstangenartige Verzahnung (84) aufweist, welche mit einem der Haltekralle (22) zugeordneten drehbaren Übertragungsritzel (44b) in Eingriff steht, das seinerseits mit der Kette (82) in Eingriff steht.

4. Notradaufsatz nach Anspruch 1,
**dadurch gekennzeichnet, dass** das Betätigungselement eine kreisringförmige Betätigungsscheibe (46; 46a; 46c; 46d) ist.

5. Notradaufsatz nach Anspruch 4,
**dadurch gekennzeichnet, dass** die Betätigungsscheibe (46; 46a; 46c; 46d) eine Innenverzahnung (48) oder eine Außenverzahnung (86) aufweist und die Antriebseinrichtung ein drehbares Antriebsritzel (52) ist, welches mit der Innenverzahnung (48) oder der Außenverzahnung (86) in Eingriff steht oder in Eingriff bringbar ist.

6. Notradaufsatz nach Anspruch 5,
**dadurch gekennzeichnet, dass** die Betätigungsscheibe (46a) mit einer kreisringförmigen Reihe von Ausnehmungen oder Durchbrechungen (80) versehen ist und jeder beweglichen Haltekralle (22) ein Ritzel (44a) zugeordnet ist, das mit den Ausnehmungen oder Durchbrechungen (80) der Betätigungsscheibe (46a) in Eingriff steht und mit einer Gewindespindel (40) verbunden ist, die ihrerseits mit einer zugehörigen Haltekralle (22) verbunden ist und die eine Drehbewegung des Ritzels (44a) in eine zumindest im Wesentlichen radial gerichtete Translationsbewegung der Haltekralle (22) umsetzt, oder dass
die Betätigungsscheibe (46) eine Innenverzahnung (48) aufweist, wobei das drehbare Antriebsritzel (52) mit der Innenverzahnung (48) in Eingriff steht und jeder beweglichen Haltekralle (22) ein Kegelrad (42) zugeordnet ist, das mit der Innenverzahnung (48) der Betätigungsscheibe (46) in Eingriff steht und mit einer Gewindespindel (40) verbunden ist, die ihrerseits mit einer zugehörigen Haltekralle (22) verbunden ist und die eine Drehbewegung des Kegelrades (42) in eine zumindest im Wesentlichen radial gerichtete Translationsbewegung der Haltekralle (22) umsetzt, oder dass
die Betätigungsscheibe (46) eine Innenverzahnung (48) und eine Außenverzahnung aufweist, wobei das drehbare Antriebsritzel (52) mit der Außenverzahnung in Eingriff steht und jeder beweglichen Haltekralle (22) ein Kegelrad (42) zugeordnet ist, das mit der Innenverzahnung (48) der Betätigungsscheibe (46) in Eingriff steht und mit einer Gewindespindel (40) verbunden ist, die ihrerseits mit einer zugehörigen Haltekralle (22) verbunden ist und die eine Drehbewegung des Kegelrades (42) in eine zumindest im Wesentlichen radial gerichtete Translationsbewegung der Haltekralle (22) umsetzt.

7. Notradaufsatz nach Anspruch 5,
**dadurch gekennzeichnet, dass** jede bewegliche Haltekralle (22) mit einem von der Haltekralle radial einwärts verlaufenden Haltearm (36b) versehen ist, der an einer Seite eine zahnstangenartige Verzahnung (84) aufweist, welche mit einem der Haltekralle (22) zugeordneten drehbaren Übertragungsritzel (44b) in Eingriff steht, das seinerseits mit der Innenverzahnung (48) oder der Außenverzahnung der Betätigungsscheibe (46) in Eingriff steht.

8. Notradaufsatz nach Anspruch 3 oder 7,
**dadurch gekennzeichnet, dass** für eine bewegliche Haltekralle (22) das Antriebsritzel (52) zugleich als Übertragungsritzel (44b) fungiert.

9. Notradaufsatz nach Anspruch 4, 5 oder 7,
**dadurch gekennzeichnet, dass** zur Veränderung des Abstands der wenigstens einen radial beweglichen Haltekralle (22) vom Mittelpunkt der Montageeinheit (18) die Betätigungsscheibe (46c) wenigstens eine spiralsegmentförmige Kulisse (90) aufweist, die mit einem Kulissenstein zusammenwirkt, der an einem mit der radial beweglichen Haltekralle (22) verbundenen Haltearm (36c) angeordnet ist.

10. Notradaufsatz nach Anspruch 9,
**dadurch gekennzeichnet, dass** auf jedem einer radial beweglichen Haltekralle (22) zugehörigen Abschnitt der Betätigungsscheibe (46c) mehrere spiralsegmentförmige Kulissen (90) nebeneinander angeordnet sind.

11. Notradaufsatz nach Anspruch 10,
**dadurch gekennzeichnet, dass** der Haltearm (36c) jeder radial beweglichen Haltekralle (22) mit mehreren nebeneinander angeordneten Kulissensteinen zum Zusammenwirken mit mehreren Kulissen (90) versehen ist.

12. Notradaufsatz nach einem der Ansprüche 9 bis 11,
**dadurch gekennzeichnet, dass** der oder jeder Kulissenstein die Form eines Bolzens (100) hat.

13. Notradaufsatz nach einem der Ansprüche 9 bis 11,
**dadurch gekennzeichnet, dass** der oder jeder Kulissenstein die Form einer kurzen spiralsegmentförmigen Rippe (92) hat.

14. Notradaufsatz nach einem der Ansprüche 9 bis 13,
**dadurch gekennzeichnet, dass** die oder jede Kulisse (90) eine spiralsegmentförmige Erhebung (88) auf der Betätigungsscheibe (46c) oder eine spiralsegmentförmige Durchbrechung (98) der Betätigungsscheibe (46c) ist.

15. Notradaufsatz nach einem der Ansprüche 9 bis 14,
**dadurch gekennzeichnet, dass** in Umfangsrichtung der Betätigungsscheibe (46c) gesehen mehrere spiralsegmentförmige Kulissen (90) vorhanden sind.

16. Notradaufsatz nach einem der vorhergehenden Ansprüche,
**dadurch gekennzeichnet, dass** jede Haltekralle (22) eine Kontaktabschnitt (116) zur Kontaktierung des Felgenhorns (26) aufweist und ferner wenigstens einen neben dem Kontaktabschnitt (116) angeordneten Sicherheitsabschnitt (118), der im Betriebszustand des Notradaufsatzes einen kleinen Abstand vom Felgenhorn (26) hat, wobei der Abstand vorzugsweise etwa 0,3 mm beträgt, und/oder
dass jede Haltekralle (22) im Bereich eines das freie Ende der Haltekralle (22) umfassenden Endabschnitts (106) auf ihrer dem Reifen (16) zugewandten Seite mit einer oder mehreren Ausnehmungen (108) zur Montageerleichterung versehen ist.

17. Notradaufsatz nach einem der vorhergehenden Ansprüche,
**dadurch gekennzeichnet, dass** jede Haltekralle (22) als Doppelkralle mit zwei in Umfangsrichtung voneinander beabstandeten Haltekrallenelementen (94) ausgeführt ist, die an einem gemeinsamen Haltearm (36c) angebracht sind.

18. Notradaufsatz nach Anspruch 17,
**dadurch gekennzeichnet, dass** zumindest eines der Haltekrallenelemente (94) dazu eingerichtet ist, sich relativ zu dem gemeinsamen Haltearm (36c) ein geringes Ausmaß um eine Achse (Y) drehen zu können, die senkrecht zu einer durch den gemeinsamen Haltearm (36c) aufgespannten Ebene verläuft.

19. Notradaufsatz nach einem der vorhergehenden Ansprüche,
**dadurch gekennzeichnet, dass** jede Haltekralle (22) eine radial verlaufende Anschlagfläche (110) aufweist, mit der sie im Betriebszustand des Notradaufsatzes an einer Außenseite der Felge (14) anliegt, und dass wenigstens eine und vorzugsweise jede Haltekralle (22) mit einem federnd in Richtung der Felge (14) vorgespannten Indikatorelement (112) versehen ist, das die Haltekralle (22) im Bereich der Anschlagfläche (110) durchsetzt, wobei ein der Felge (14) zugewandtes Ende des Indikatorelements (112) zur Kontaktierung der Felge (14) bestimmt ist und ein entgegengesetztes, anderes Ende des Indikatorelements (112) im Betriebszustand des Notradaufsatzes eine korrekte Montage der Montageeinheit (18) anzeigt.

20. Notradaufsatz nach einem der vorhergehenden Ansprüche,
**dadurch gekennzeichnet, dass** die Laufflächeneinheit (20) eine von der Montageeinheit (18) separate und aus mehreren Kreisringsegmenten (68, 70) bestehende Einheit ist, die zur Verbindung mit der Montageeinheit (18) ausgestaltet und im Betriebszustand des Notradaufsatzes mit der Montageeinheit (18) verbunden ist.

21. Notradaufsatz nach Anspruch 20,
**dadurch gekennzeichnet, dass** zur Verbindung der Laufflächeneinheit (20) mit der Montageeinheit (18) Aufnahmebolzen (64) dienen, die auf der von dem Fahrzeugrad abgewandten Seite der Montageeinheit (18) hervorstehend angeordnet sind.

22. Notradaufsatz nach Anspruch 21,
**dadurch gekennzeichnet, dass** die Aufnahmebolzen (64) Gewindebolzen sind und die Laufflächeneinheit (20) durch Muttern an der Montageeinheit (18) befestigt wird, mit denen die Laufflächeneinheit (20) an der Montageeinheit (18) festgeschraubt wird.

23. Notradaufsatz nach Anspruch 22,
**dadurch gekennzeichnet, dass** die Muttern Hutmuttern (76) sind und dass in jeder Hutmutter (76) eine optische und/oder akustische, einen korrekten Montagezustand signalisierende Anzeigeeinrichtung enthalten ist.

24. Notradaufsatz nach Anspruch 20,
**dadurch gekennzeichnet, dass** zur Verbindung der Laufflächeneinheit (20) mit der Montageeinheit (18) Rasteinrichtungen dienen, die auf der von dem Fahrzeugrad abgewandten Seite der Montageeinheit (18) und/oder der Laufflächeneinheit (20) angeordnet sind.

25. Notradaufsatz nach Anspruch 24,
**dadurch gekennzeichnet, dass** jede Rasteinrichtung einen radial beweglichen Schieber (142) umfassen, der radial auswärts federnd vorgespannt ist, wobei der Schieber (142) eine Auflauframpe (154) aufweist, die beim Montieren der Laufflächeneinheit (20) mit letzterer in Kontakt kommt, sodass der Schieber (142) beim Montagevorgang radial einwärts verschoben wird und sich nach erfolgter Montage der Laufflächeneinheit (20) aufgrund seiner federnden Vorspannung wieder radial auswärts und über die Oberfläche der Laufflächeneinheit (20) schiebt.

26. Notradaufsatz nach einem der Ansprüche 20 bis 25,
**dadurch gekennzeichnet, dass** die Laufflächeneinheit (20) auf ihrer dem Fahrzeugrad zugewandten Seite mit wenigstens einer selbstverspannenden Sicherheitskralle (124) zum Hintergreifen des Felgenhorns (26) der Felge (14) versehen ist, wobei jede Sicherheitskralle (124) in Umfangsrichtung des Notradaufsatzes gesehen zwischen jeweils zwei Haltekrallen (22) angeordnet ist.

27. Notradaufsatz nach Anspruch 26,
**dadurch gekennzeichnet, dass** jede Sicherheitskralle (124) einen Betätigungsschieber (126) umfasst, dessen eines Ende eine Lauffläche (21) der Laufflächeneinheit (20) durchsetzt und radial aus der Lauffläche (21) hervorsteht, und dessen anderes Ende bei einer nach radial innen erfolgenden Verlagerung des Betätigungsschiebers (126) die Sicherheitskralle (124) hinter das Felgenhorn (26) der Felge (14) drückt.

28. Notradaufsatz nach Anspruch 27,
**dadurch gekennzeichnet, dass** der Betätigungsschieber (126) nach radial auswärts federnd vorgespannt ist und eine Arretierungseinrichtung aufweist, die nach einer nach radial innen erfolgten Verlagerung des Betätigungsschiebers (126) verhindert, dass sich der Betätigungsschieber (126) radial auswärts bewegt.

29. Notradaufsatz nach einem der vorhergehenden Ansprüche,
**dadurch gekennzeichnet, dass** die Antriebseinrichtung ein mit dem Betätigungselement gekoppeltes oder koppelbares Antriebsritzel (52) ist, welches mit einer Hutmutter (54) verbunden ist, in der sich eine Drehmomentbegrenzungseinrichtung befindet, und/oder
dass die Montageeinheit (18) ein ringförmiges Gehäuse (60) aufweist, in dem das Betätigungselement angeordnet ist, und dass ein das freie Zentrum des Gehäuses (60) überspannender, vorzugsweise bogenförmig nach außen gewölbter Haltegriff (104) am Gehäuse (60) befestigt ist.

## Claims

1. Emergency wheel attachment (10; 10a; 10b; 10c; 10d) for a vehicle wheel (12), which comprises a rim (14) and a tire (16) arranged on the rim (14), wherein the emergency wheel attachment is provided to be placed onto the outside of the vehicle wheel (12) and to enable a driving operation with a restricted tire function in an operating state attached to the vehicle wheel (12), wherein the emergency wheel attachment has a mounting unit (18), which serves to mount the emergency wheel attachment (10; 10a; 10b; 10c; 10d) on the vehicle wheel, and a substantially annular tread unit (20), which in the operating state contacts a road on which the vehicle wheel (12) is intended to roll, wherein the mounting unit (18) is provided with at least two retaining claws (22), which are designed to fasten the mounting unit (18) to the rim (14) of the vehicle wheel (12) by engaging behind the rim flange (26) of the rim (14), wherein at least one of the retaining claws (22) is radially movably to change its distance from the center point of the mounting unit (18), wherein the mounting unit (18) has an annular actuating element, which is rotatable about an axis of rotation (A) coinciding with the vehicle wheel axis in the operating state of the emergency wheel attachment and which forms part of a gear mechanism, which converts a rotation of the actuating element into a radial movement of the or all radially movable retaining claws (22), wherein the annular mounting unit (18) further comprises a drive device, which is coupled or is configured to be coupled to the annular actuating element and the actuation of which causes a rotation of the annular actuating element,
**characterised in that** the mounting unit (18) is substantially annular.

2. Emergency wheel attachment according to claim 1, **characterised in that** the actuating element is a chain (82) and the drive device is a rotatable drive pinion (52), which meshes or can be brought to mesh with the chain (82).

3. Emergency wheel attachment according to claim 2, **characterised in that** each movable retaining claw (22) is provided with a retaining arm (36b) extending radially inwards from the retaining claw, which arm has rack-like teeth (84) on one side that mesh with a rotatable transmission pinion (44b) associated with the retaining claw (22), which pinion in turn meshes with the chain (82).

4. Emergency wheel attachment according to claim 1, **characterised in that** the actuating element is an annular actuating disc (46; 46a; 46c; 46d).

5. Emergency wheel attachment according to claim 4, **characterised in that** the actuating disc (46; 46a; 46c; 46d) has internal teeth (48) or external teeth (86) and the drive device is a rotatable drive pinion (52), which meshes or is configured to mesh with the internal teeth (48) or the external teeth (86).

6. Emergency wheel attachment according to claim 5, **characterised in that** the actuating disc (46a) is provided with an annular array of recesses or openings (80) and associated with each movable retaining claw (22) is a pinion (44a), which meshes with the recesses or openings (80) of the actuating disc (46a) and is connected to a threaded spindle (40), which in turn is connected to an associated retaining claw (22) and which converts a rotary movement of the pinion (44a) into an at least substantially radially directed translatory movement of the retaining claw (22), or that
the actuating disc (46) has internal teeth (48), wherein the rotatable drive pinion (52) meshes with the internal teeth (48) and associated with each movable retaining claw (22) is a bevel gear (42), which meshes with the internal teeth (48) of the actuating disc (46) and is connected to a threaded spindle (40), which in turn is connected to an associated retaining claw (22) and which converts a rotary movement of the bevel gear (42) into an at least substantially radially directed translatory movement of the retaining claw (22), or that
the actuating disc (46) has internal teeth (48) and external teeth, wherein the rotatable drive pinion (52) meshes with the external teeth and associated with each movable retaining claw (22) is a bevel gear (42), which meshes with the internal teeth (48) of the actuating disc (46) and is connected to a threaded spindle (40), which in turn is connected to an associated retaining claw (22) and which converts a rotary movement of the bevel gear (42) into an at least substantially radially directed translatory movement of the retaining claw (22).

7. Emergency wheel attachment according to claim 5, **characterised in that** each movable retaining claw (22) is provided with a retaining arm (36b) extending radially inwards from the retaining claw, which arm has rack-like teeth (84) on one side that mesh with a rotatable transmission pinion (44b), which is associated with the retaining claw (22) and which in turn meshes with the internal teeth (48) or the external teeth of the actuating disc (46).

8. Emergency wheel attachment according to claim 3 or 7, **characterised in that** for a movable retaining claw (22) the drive pinion (52) also functions as a transmission pinion (44b).

9. Emergency wheel attachment according to claim 4, 5, or 7, **characterised in that** to change the distance of the at least one radially movable retaining claw (22) from the center point of the mounting unit (18), the actuating disc (46c) has at least one motion link (90) in the shape of a spiral segment, which interacts with a link block, which is arranged on a retaining arm (36c) connected to the radially movable retaining claw (22).

10. Emergency wheel attachment according to claim 9, **characterised in that** on each section of the actuating disc (46c) associated with a radially movable retaining claw (22), several motion links (90) in the shape of a spiral segment are arranged adjacent to one another.

11. Emergency wheel attachment according to claim 10, **characterised in that** the retaining arm (36c) of each radially movable retaining claw (22) is provided with several link blocks arranged adjacent to one another to interact with several motion links (90).

12. Emergency wheel attachment according to any one of claims 9 to 11, **characterised in that** the or each link block has the form of a pin (100).

13. Emergency wheel attachment according to any one of claims 9 to 11, **characterised in that** the or each link block has the form of a short rib (92) in the shape of a spiral segment.

14. Emergency wheel attachment according to any one of claims 9 to 13, **characterised in that** the or each motion link (90) is an elevation (88) in the shape of a spiral segment on the actuating disc (46c) or an opening (98) of the actuating disc (46c) in the shape of a spiral segment.

15. Emergency wheel attachment according to any one of claims 9 to 14, **characterised in that**, seen in the circumferential direction of the actuating disc (46c), several motion links (90) in the shape of a spiral segment are provided.

16. Emergency wheel attachment according to any one of the preceding claims, **characterised in that** each retaining claw (22) has a contact portion (116) for contacting the rim flange (26) and furthermore at least one security portion (118), which is arranged next to the contact portion (116) and in the operating state of the emergency wheel attachment has a small spacing from the rim flange (26), wherein the spacing is preferably approximately 0.3 mm, and/or
that each retaining claw (22), in the region of an end portion (106) comprising the free end of the retaining claw (22), is provided with one or more recesses (108) on its side facing the tire (16) to facilitate mounting.

17. Emergency wheel attachment according to any one of the preceding claims, **characterised in that** each retaining claw (22) is implemented as a double claw with two retaining claw elements (94), which are spaced at a distance from one another in the circumferential direction and are affixed to a common retaining arm (36c).

18. Emergency wheel attachment according to claim 17, **characterised in that** at least one of the retaining claw elements (94) is adapted to be rotatable relative to the common retaining arm (36c) to a slight extent about an axis (Y), which runs perpendicular to a plane spanned by the common retaining arm (36c).

19. Emergency wheel attachment according to any one of the preceding claims, **characterised in that** each retaining claw (22) has a radially extending stop surface (110) with which it rests in the operating state of the emergency wheel attachment on an outside of the rim (14), and that at least one and preferably each retaining claw (22) is provided with an indicator element (112), which is pretensioned elastically in the direction of the rim (14) and which passes through the retaining claw (22) in the region of the stop surface (110), wherein an end of the indicator element (112) facing the rim (14) is intended to contact the rim (14) and an opposing, other end of the indicator element (112) displays correct mounting of the mounting unit (18) in the operating state of the emergency wheel attachment.

20. Emergency wheel attachment according to any one of the preceding claims, **characterised in that** the tread unit (20) is a unit separate from the mounting unit (18) and consisting of several annular segments (68, 70), which tread unit is adapted for connection to the mounting unit (18) and is connected to the mounting unit (18) in the operating state of the emergency wheel attachment.

21. Emergency wheel attachment according to claim 20, **characterised in that** locating bolts (64), which are arranged protruding on the side of the mounting unit (18) facing away from the vehicle wheel, are used to connect the tread unit (20) to the mounting unit (18).

22. Emergency wheel attachment according to claim 21, **characterised in that** the locating bolts (64) are threaded bolts and the tread unit (20) is attached by nuts to the mounting unit (18), with which nuts the tread unit (20) is screwed tightly on the mounting unit (18).

23. Emergency wheel attachment according to claim 22, **characterised in that** the nuts are cap nuts (76) and that contained in each cap nut (76) is an optical and/or acoustic display device signalling a correct mounting state.

24. Emergency wheel attachment according to claim 20, **characterised in that** latching devices, which are arranged on at least one of the side of the mounting unit (18) and of the tread unit (20) facing away from the vehicle wheel, are used to connect the tread unit (20) to the mounting unit (18).

25. Emergency wheel attachment according to claim 24, **characterised in that** each latching device comprises a radially movable slider (142), which is elastically pretensioned radially outwards, wherein the slider (142) has a ramp (154), which on mounting of the tread unit (20) comes into contact with the latter, so that the slider (142) is displaced radially inwards in the mounting process and following mounting of the tread unit (20) slides radially outwards again on account of its elastic pretensioning and slides over the surface of the tread unit (20).

26. Emergency wheel attachment according to any one of claims 20 to 25, **characterised in that** the tread unit (20) is provided on its side facing the vehicle wheel with at least one self-bracing security claw (124) for engaging behind the rim flange (26) of the rim (14), wherein each security claw (124) is arranged, seen in the circumferential direction of the emergency wheel attachment, between two retaining claws (22).

27. Emergency wheel attachment according to claim 26, **characterised in that** each security claw (124) comprises an actuating slider (126), one end of which passes through a tread (21) of the tread unit (20) and protrudes radially from the tread (21), and the other end of which, when a displacement of the actuating slider (126) radially inwards takes place, presses the security claw (124) behind the rim flange (26) of the rim (14).

28. Emergency wheel attachment according to claim 27, **characterised in that** the actuating slider (126) is elastically pretensioned radially outwards and has a locking device which, following a displacement of the actuating slider (126) that has taken place radially inwards, prevents the actuating slider (126) from moving radially outwards.

29. Emergency wheel attachment according to any one of the preceding claims, **characterised in that** the drive device is a drive pinion (52), which is coupled or may be coupled to the actuating element and is connected to a cap nut (54) in which a torque-limiting device is located, and/or
that the mounting unit (18) has an annular housing (60) in which the actuating element is arranged and that a handle (104) spanning the free center of the housing (60) and preferably curved convexly outwards is attached to the housing (60).

## Revendications

1. Accessoire de roue de secours (10; 10a; 10b; 10c; 10d) pour une roue de véhicule (12), qui comprend une jante (14) et un pneu (16) monté sur la jante (14), l'accessoire de roue de secours étant destiné à être posé sur le côté extérieur de la roue de véhicule (12) et lorsqu'il est fixé à la roue de véhicule (12) dans un état de marche, à permettre un mode de conduite lorsque le fonctionnement du pneu est limité, l'accessoire de roue de secours présentant une unité de montage (18), qui sert à monter l'accessoire de roue de secours (10; 10a; 10b; 10c; 10d) sur la roue de véhicule, et une unité de surface de roulement (20) sensiblement circulaire, qui est en contact, dans un état de marche, avec une voie de circulation, sur laquelle la roue de véhicule (20) peut rouler, dans lequel l'unité de montage (18) est pourvu d'au moins deux griffes de retenue (22), qui sont conçues pour fixer l'unité de montage (18) sur la jante (14) de la roue de véhicule (12) en venant bloquer par l'arrière le rebord de jante (26) de la jante (14), au moins l'une des griffes de retenue (22) étant conçue de manière radialement mobile pour pouvoir modifier sa distance par rapport au centre de l'unité de montage (18), dans lequel l'unité de montage (18) présente un élément d'actionnement circulaire qui peut tourner autour d'un axe de rotation (A) qui coïncide avec l'axe de la roue de véhicule lorsque l'accessoire de roue de secours est dans un état de marche et forme une partie d'une transmission, qui convertit une rotation de l'élément d'actionnement en un mouvement radiale de la ou de toutes les griffes de retenue (22) mobiles radialement, dans lequel l'unité de montage (18) circulaire comprend en outre un dispositif d'entraînement pouvant être accouplé ou accouplé à l'élément d'actionnement circulaire, dont l'actionnement provoque une rotation de l'élément d'actionnement circulaire, **caractérisé en ce que** l'unité de montage (18) est sensiblement circulaire.

2. Accessoire de roue de secours selon la revendication 1,
**caractérisé en ce que** l'élément d'actionnement est une chaîne (82) et le dispositif d'entraînement est un pignon menant (52) rotatif qui s'engrène ou peut s'engrener dans la chaîne (82).

3. Accessoire de roue de secours selon la revendication 2,
**caractérisé en ce que** chaque griffe de retenue (22) mobile est pourvue d'un bras de retenue (36b) s'étendant vers l'intérieur radialement depuis la griffe de retenue, lequel présente sur un côté une denture (84) en forme de crémaillère, qui s'engrène dans un pignon de transfert (44b) rotatif associé à la griffe de retenue (22), qui pour sa part s'engrène dans la chaîne (82).

4. Accessoire de roue de secours selon la revendication 1,
**caractérisé en ce que** l'élément d'actionnement est un disque d'actionnement (46; 46a; 46c; 46d) circulaire.

5. Accessoire de roue de secours selon la revendication 4,
**caractérisé en ce que** le disque d'actionnement (46; 46a; 46c; 46d) présente une denture intérieure (48) ou une denture extérieure (86) et le dispositif d'entraînement est un pignon d'entraînement (52) rotatif, qui s'engrène ou peut s'engrener avec la denture intérieure (48) ou avec la denture extérieure (86).

6. Accessoire de roue de secours selon la revendication 5,
**caractérisé en ce que** le disque d'actionnement (46a) est pourvu d'une rangée circulaire d'évidements ou de creux (80) et chaque griffe de retenue (22) mobile est associée à un pignon (44a) qui s'insère dans les évidements ou les creux (80) du disque d'actionnement (46a) et est relié à une tige filetée (40) qui pour sa part est reliée à une griffe de retenue (22) associée et qui convertit un mouvement rotatif du pignon (44a) en au moins un mouvement de translation au moins sensiblement orienté radialement de la griffe de retenue (22), ou **en ce que**
le disque d'actionnement (46a) présente une denture intérieure (48), dans lequel le pignon d'entraînement (52) rotatif s'engrène avec la denture intérieure (48) et chaque griffe de retenue (22) mobile est associée à une roue conique (42) qui s'engrène avec la denture intérieure (48) du disque d'actionnement (46) et est reliée à une tige filetée (40) qui pour sa part est reliée à une griffe de retenue (22) associée et qui convertit un mouvement rotatif de la roue conique (42) en au moins un mouvement de translation au moins sensiblement orienté radialement de la griffe de retenue (22), ou **en ce que**
le disque d'actionnement (48) est pourvu d'une denture intérieure (48) et d'une denture extérieure, dans lequel le pignon d'entraînement (52) rotatif s'engrène avec la denture extérieure et chaque griffe de retenue (22) mobile est associé à une roue conique (42) qui s'engrène avec la denture intérieure (48) du disque d'actionnement (46) et est relié à une tige filetée (40) qui pour sa part est reliée à une griffe de retenue (22) associée et qui convertit un mouvement rotatif de la roue conique (42) en au moins un mouvement de translation au moins sensiblement orienté radialement de la griffe de retenue (22).

7. Accessoire de roue de secours selon la revendication 5,
**caractérisé en ce que** chaque griffe de retenue (22) mobile est pourvue d'un bras de retenue (36b) s'étendant radialement vers l'intérieur depuis la griffe de retenue, lequel présente sur un côté une denture (84) en forme de crémaillère, qui s'engrène avec un pignon de transfert (44b) rotatif associé à la griffe de retenue (22), qui pour sa part s'engrène avec la denture intérieure (48) ou avec la denture extérieure du disque d'actionnement (46).

8. Accessoire de roue de secours selon la revendication 3 ou 7,
**caractérisé en ce que** pour une griffe de retenue mobile (22) mobile, le pignon d'entraînement (52) se présente également sous la forme de pignon de transfert (44b).

9. Accessoire de roue de secours selon la revendication 4, 5 ou 7,
**caractérisé en ce que** pour modifier la distance de l'au moins une griffe de retenue (22) au moins mobile radialement depuis le centre de l'unité de montage (18), le disque d'actionnement (46c) présente au moins une coulisse (90) en forme de segment hélicoïdal qui coopère avec un coulisseau qui est disposé sur un bras de retenue (36c) relié à la griffe de retenue (22) radialement mobile.

10. Accessoire de roue de secours selon la revendication 9,
**caractérisé en ce que** sur chaque section associé à une griffe de retenue (22) mobile radialement du disque d'actionnement (46c) sont disposés côte à côte plusieurs coulisses (90) en forme de segment hélicoïdal.

11. Accessoire de roue de secours selon la revendication 10,
**caractérisé en ce que** le bras de retenue (36c) de chaque griffe de retenue (22) mobile radialement est pourvu de plusieurs coulisseaux disposés côte à côté pour coopérer avec plusieurs coulisses (90).

12. Accessoire de roue de secours selon la revendication 9 à 11,
**caractérisé en ce que** le ou chaque coulisseau se présente sous la forme d'un boulon (100).

13. Accessoire de roue de secours selon la revendication 9 à 11,
**caractérisé en ce que** le ou chaque coulisseau se présente sous la forme d'une nervure (92) courte en forme de segment hélicoïdal.

14. Accessoire de roue de secours selon la revendication 9 à 13,
**caractérisé en ce que** la ou chaque coulisse (90) est une saillie (88) en forme de segment hélicoïdal sur le disque d'actionnement (46c) ou un évidement (98) en forme de segment hélicoïdal du disque d'actionnement (46c).

15. Accessoire de roue de secours selon la revendication 9 à 14,
**caractérisé en ce que** lorsqu'on observe dans la direction circonférentielle du disque d'actionnement (46c), sont présentes plusieurs coulisses (90) en forme de segment hélicoïdal.

16. Accessoire de roue de secours selon l'une quelconque des revendications précédentes,
**caractérisé en ce que** chaque griffe de retenue (22) présente une section de contact (116) pour entrer en contact avec le rebord de jante (26) et en outre au moins une section de sureté (118) disposée à côté de la section de contact (116), qui lors du fonctionnement de l'accessoire de roue de secours a une petite distance par rapport au rebord de jante (26), la distance s'élevant de préférence à environ 0,3 mm, et/ou
**en ce que** chaque griffe de retenue (22) est dotée dans la zone d'une section d'extrémité comprenant l'extrémité libre de la griffe de retenue (22) sur son côté orienté vers le pneu (16) d'un ou de plusieurs évidements (108) pour faciliter le montage.

17. Accessoire de roue de secours selon l'une quelconque des revendications précédentes,
**caractérisé en ce que** chaque griffe de retenue (22) est conçue sous la forme de griffe double avec deux éléments de griffe de retenue (94) espacés l'un de l'autre dans la direction circonférentielle, lesquels sont posés sur un bras de retenue commun (36c).

18. Accessoire de roue de secours selon la revendication 17,
**caractérisé en ce que** au moins l'un des éléments de griffe de retenue (94) est conçu pour pouvoir tourner autour d'un axe (Y) par rapport au bras de retenue (36c) commun dans une moindre mesure, qui s'étend perpendiculairement à un plan s'étendant par le bras de retenue commun (36c).

19. Accessoire de roue de secours selon l'une quelconque des revendications précédentes,
**caractérisé en ce que** chaque griffe de retenue (22) présente une surface de butée (110) s'étendant radialement, avec laquelle elle repose sur un côté externe de la jante (14) lorsque l'accessoire de roue de secours est en état de fonctionnement, et **en ce que**, au moins une et de préférence chaque griffe de retenue (22) est pourvue d'un élément indicateur (112) précontraint par un ressort dans la direction de la jante (14), lequel introduit la griffe de retenue (22) dans la zone de la surface de butée (110), dans lequel une extrémité orientée vers la jante (14) de l'élément indicateur (112) est déterminée pour entrer en contact avec la jante (14) et une autre extrémité opposée de l'élément indicateur (112) affiche un montage correct de l'unité de montage (18) lorsque l'accessoire de roue de secours est prêt à fonctionner.

20. Accessoire de roue de secours selon l'une quelconque des revendications précédentes,
**caractérisé en ce que** l'unité de surface de roulement (20) est une unité constituée de plusieurs segments circulaires (68, 70) et séparée de l'unité de montage (18), laquelle est conçue pour être reliée à l'unité de montage et est reliée à l'unité de montage (18) lorsque l'accessoire de roue de secours est prêt à fonctionner.

21. Accessoire de roue de secours selon la revendication 20,
**caractérisé en ce que** des boulons de réception (64) servent à relier l'unité de surface de roulement (20) à l'unité de montage (18), lesquels sont disposés en saillie sur le côté de l'unité de montage opposé à la roue de véhicule (18).

22. Accessoire de roue de secours selon la revendication 21,
**caractérisé en ce que** les boulons de réception (64) sont des boulons filetés et l'unité de surface de roulement (20) est fixée par des écrous sur l'unité de montage (18) avec lesquels l'unité de surface de roulement (20) est vissée sur l'unité de montage (18).

23. Accessoire de roue de secours selon la revendication 22, **caractérisé en ce que** les écrous sont des écrous borgnes (76) et **en ce que** dans chaque écrou borgne (76) est contenu un dispositif d'affichage acoustique et/ou optique signalisant un état de montage correct.

24. Accessoire de roue de secours selon la revendication 20,
**caractérisé en ce que** des dispositifs d'encliquetage servent à relier l'unité de surface de roulement (20) à l'unité de montage (18), qui sont disposés sur le côté opposé à la roue de véhicule, de l'unité de montage (18) et/ou de l'unité de surface de roulement (20).

25. Accessoire de roue de secours selon la revendication 24, **caractérisé en ce que** chaque dispositif d'encliquetage comprend un poussoir mobile radialement (142), qui est précontraint par un ressort radialement vers l'extérieur, le poussoir (142) présentant une rampe d'appui (154) qui vient en contact avec ce dernier lors du montage de l'unité de surface de roulement (20), de sorte que le poussoir (142) soit déplacé radialement vers l'intérieur lors du processus de montage et qui, une fois le montage de l'unité de surface de roulement (20) effectué, en raison de sa précontrainte par un ressort, se déplace de nouveau radialement vers l'extérieur et sur la surface de l'unité de surface de roulement (20).

26. Accessoire de roue de secours selon l'une quelconque des revendications 20 à 25,
**caractérisé en ce que** l'unité de surface de roulement (20) est pourvue sur son côté orienté vers la roue de véhicule d'au moins une griffe de sureté (124) autobloquante pour venir bloquer par l'arrière le rebord de jante (26) de la jante (14), chaque griffe de sureté (124) étant disposée dans la direction circonférentielle de l'accessoire de roue de secours entre chacune des deux griffes de retenue (22).

27. Accessoire de roue de secours selon la revendication 26,
**caractérisé en ce que** chaque griffe de sureté (124) comprend un poussoir d'actionnement (126) dont une extrémité introduit une surface de roulement (21) dans l'unité de surface de roulement (20) et en saillie radialement de la surface de roulement (21), et dont l'autre extrémité lorsque le poussoir d'actionnement (126) a été déplacé radialement vers l'intérieur, la griffe de sureté (124) appuie par l'arrière sur le rebord de jante (26) de la jante (14).

28. Accessoire de roue de secours selon la revendication 27,
**caractérisé en ce que** le poussoir d'actionnement (126) est précontraint par un ressort radialement vers l'extérieur et présente un dispositif d'arrêt, qui lorsque le poussoir d'actionnement (126) a été déplacé radialement vers l'intérieur, empêche que le poussoir d'actionnement (126) ne se déplace radialement vers l'extérieur.

29. Accessoire de roue de secours selon l'une quelconque des revendications précédentes,
**caractérisé en ce que** le dispositif d'entraînement est un pignon d'entraînement (52) pouvant être accouplé ou accouplé à l'élément d'actionnement qui est relié à un écrou borgne (54) dans lequel se trouve un dispositif de limitation de couple, et/ou
**en ce que** l'unité de montage (18) présente un boîtier (60) circulaire dans lequel est disposé l'élément d'actionnement et **en ce qu'**une poignée (104) enjambant le centre libre du logement (60), bombée vers l'extérieur de préférence arquée, est fixée sur le boîtier (60).
